(19) **Europäisches Patentamt**
**European Patent Office**
**Office européen des brevets**

(11) **EP 4 632 322 A1**

(12) **EUROPEAN PATENT APPLICATION**

(43) Date of publication:
**15.10.2025 Bulletin 2025/42**

(21) Application number: **25166794.5**

(22) Date of filing: **27.03.2025**

(51) International Patent Classification (IPC):
*G01C 3/08* (2006.01)   *G01C 3/14* (2006.01)
*G01S 7/497* (2006.01)   *H04N 13/00* (2018.01)

(52) Cooperative Patent Classification (CPC):
**G01C 3/085; G01C 3/14; G01S 7/497; H04N 13/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2024 JP 2024064858**

(71) Applicant: **CANON KABUSHIKI KAISHA**
**Tokyo 146-8501 (JP)**

(72) Inventor: **SHIOZAWA, Takashi**
**Tokyo, 146-8501 (JP)**

(74) Representative: **Canon Europe Limited**
**European Intellectual Property Group**
**4 Roundwood Avenue**
**Stockley Park**
**Uxbridge UB11 1AF (GB)**

(54) **DISTANCE MEASUREMENT DEVICE, MOVABLE APPARATUS, DISTANCE MEASUREMENT METHOD, COMPUTER PROGRAM AND STORAGE MEDIUM**

(57) A distance measurement device includes: a first acquisition unit (310) configured to acquire first distance information; a second acquisition unit (320) configured to acquire second distance information; a first correction value generation unit (330) configured to calculate a first correction value for correcting the first distance information based on the second distance information; a reliability score determination unit (340) configured to calculate a reliability score indicating a reliability of the first correction value and determine the reliability of the first correction value based on the reliability score; a second correction value generation unit (350) configured to generate a second correction value from the first correction value whose reliability score is equal to or greater than a predetermined threshold and which is acquired within a predetermined valid time interval; and a correction unit (360) configured to correct the first distance information using the second correction value.

FIG. 3A

FIG. 3B

FIG. 3C

EP 4 632 322 A1

**Description**

BACKGROUND OF THE DISCLOSURE

Field of the Disclosure

The present disclosure relates to a distance measurement device, a movable apparatus, a distance measurement method, a computer program, a storage medium, and the like.

Description of the Related Art

A technology is known in which a camera capable of acquiring depth information, such as a stereo distance measurement system or an imaging plane phase difference distance measurement system, is mounted on a movable apparatus such as an automobile to measure the distance to a subject in front of the vehicle and control the vehicle based on the distance information.

However, a camera mounted on a vehicle causes errors in distance measurement values due to deformation of the camera over time, or errors in distance measurement values due to the influence of the environment around the camera, such as the ambient temperature or the temperature inside the vehicle cabin.

Japanese Patent Laid-Open Publication No. 2022-154179 proposes a method of correcting errors in the distance measurement values of a distance measurement camera in a time series manner using distance information obtained from a second distance measurement unit separate from the camera used for distance measurement.

However, when a second distance measurement unit different from the camera used for distance measurement is used to correct the distance value of the distance measurement camera, the second distance measurement unit is required to have higher distance accuracy than the distance measurement camera, and when mounted on a vehicle, distance measurement needs to be performed in a variety of scenes. There are scenes where the distance measurement method is not suitable, and in some scenes, the accuracy may be lower than that of the distance measurement camera being corrected.

In order to solve the above problem, in Japanese Patent Laid-Open Publication No. 2022-154179, a reliability is set for the distance measurement value obtained by the second distance measurement unit, and correction is not performed when the reliability is low. In this case, it is difficult to perfectly match the reliability of the distance measurement value with the distance accuracy, and even if the reliability of the distance measurement value is high, the actual distance accuracy may be low. Moreover, if the threshold for determining the reliability is set high in order to avoid these problems, the probability of correction being performed may be significantly reduced.

SUMMARY OF THE DISCLOSURE

According to a first aspect of the present disclosure, there is provided a distance measurement device as specified in claim 1. Preferable features of the first aspect of the present disclosure are specified in claims 2-11. These preferable features of the first aspect are also preferable features of the other aspects of the present disclosure. According to a second aspect of the present disclosure, there is provided a movable apparatus as specified in claim 12. According to a third aspect of the present disclosure, there is provided a distance measurement method as specified in claim 13. According to a fourth aspect of the present disclosure, there is provided a computer program as specified in claim 14. According to a fifth aspect of the present disclosure, there is provided a storage medium as specified in claim 15.

Further features of the present disclosure will become apparent from the following description of embodiments with reference to the attached drawings.

BRIEF DESCRIPTION OF THE DRAWINGS

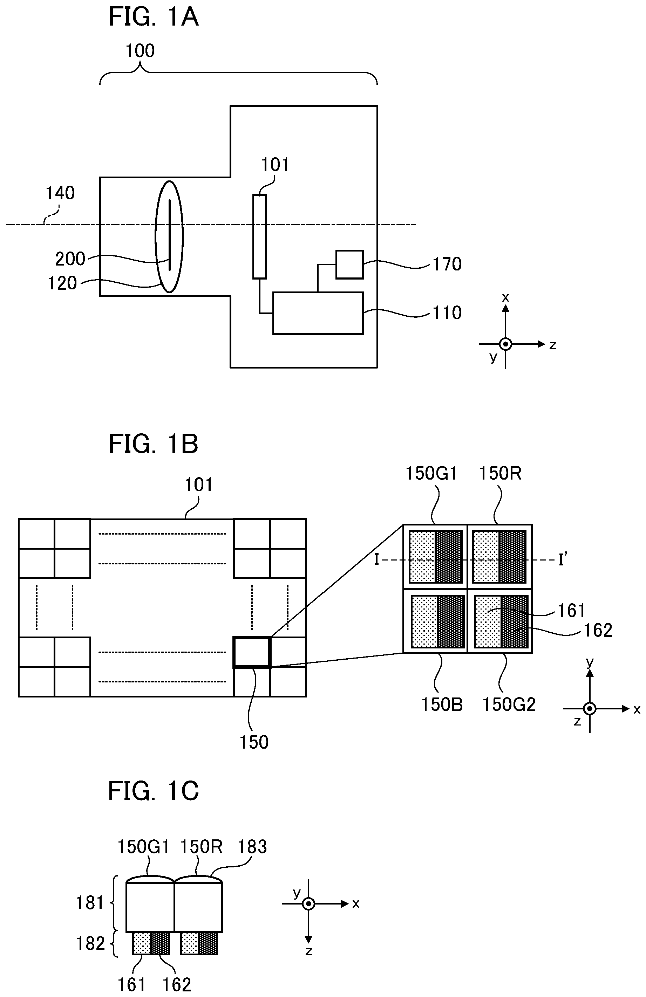

Fig. 1A is a diagram schematically illustrating an example of the configuration of an imaging apparatus according to a first embodiment of the present disclosure, Fig. 1B is an xy cross-sectional view of an imaging element 101 in Fig. 1A, and Fig. 1C is a diagram schematically illustrating an I-I' cross-section of a pixel group 150 in Fig. 1B.

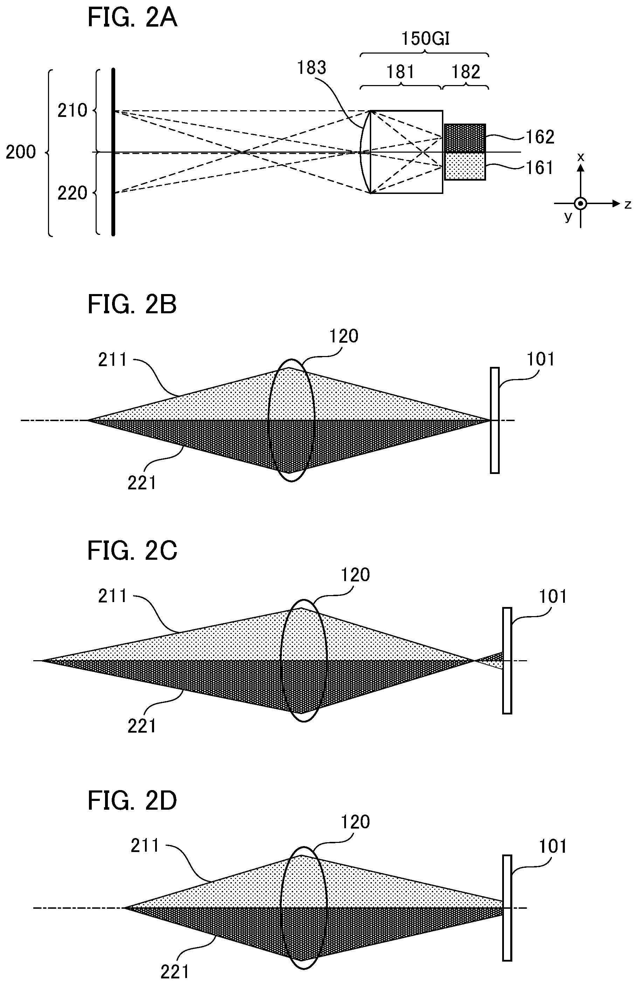

Fig. 2A is a diagram illustrating a relationship between an exit pupil of an image forming optical system 120 of the first embodiment and a light receiving unit of the imaging element 101, and Figs. 2B to 2D are diagrams for describing a relationship between the parallax amount and the defocus amount due to the imaging element 101 and the image forming optical system 120 of the first embodiment.

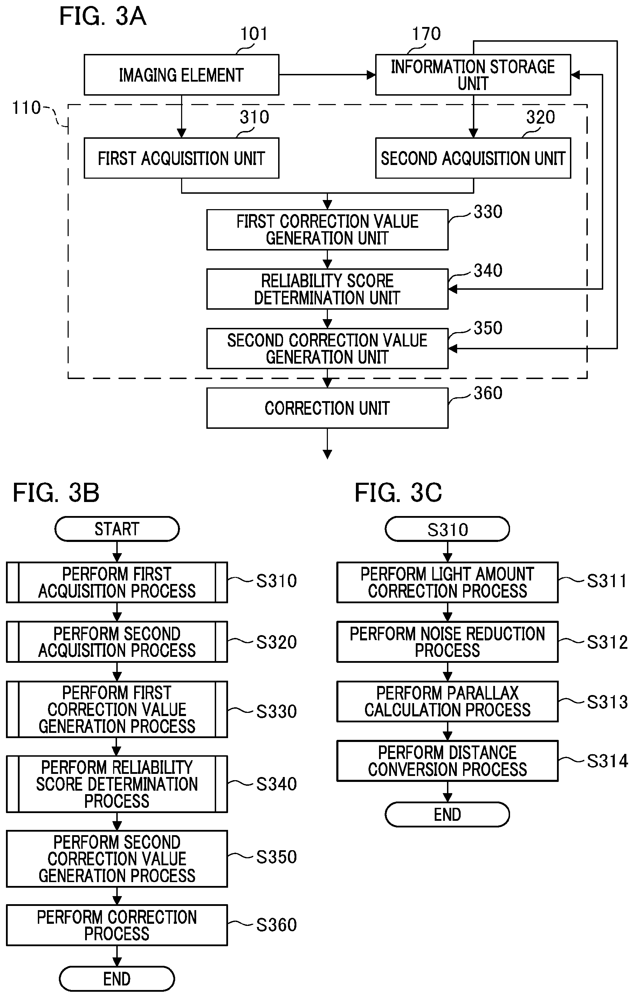

Fig. 3A is a functional block diagram illustrating an example of the configuration of a distance measurement device 110 according to the first embodiment, Fig. 3B is a flowchart illustrating an example of the operation of the distance measurement device 110, and Fig. 3C is a flowchart illustrating an example of a part of the operation of Fig. 3B.

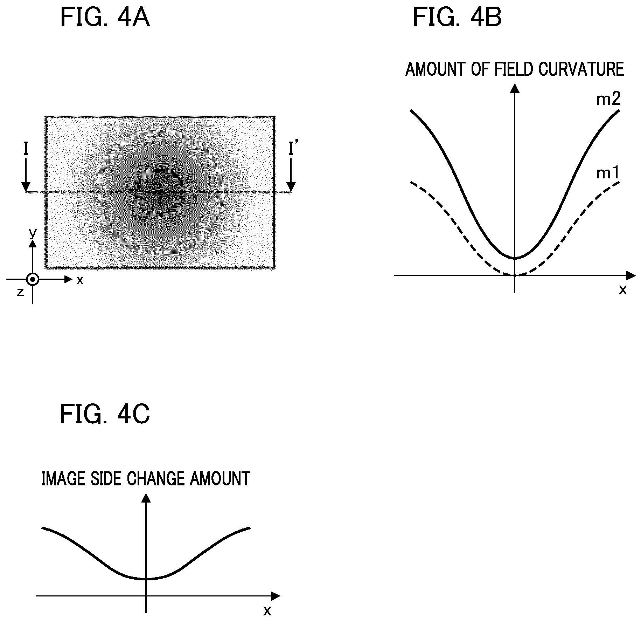

Fig. 4A is a diagram illustrating an example of a two-dimensional distribution of the amount of field curvature of the image forming optical system 120 within the effective pixel range of the imaging element 101, Fig. 4B is a diagram illustrating an example of the amount of field curvature along line I-I' in Fig. 4A, and Fig. 4C is a diagram illustrating an example of the image side change amount along line I-I' in Fig. 4A.

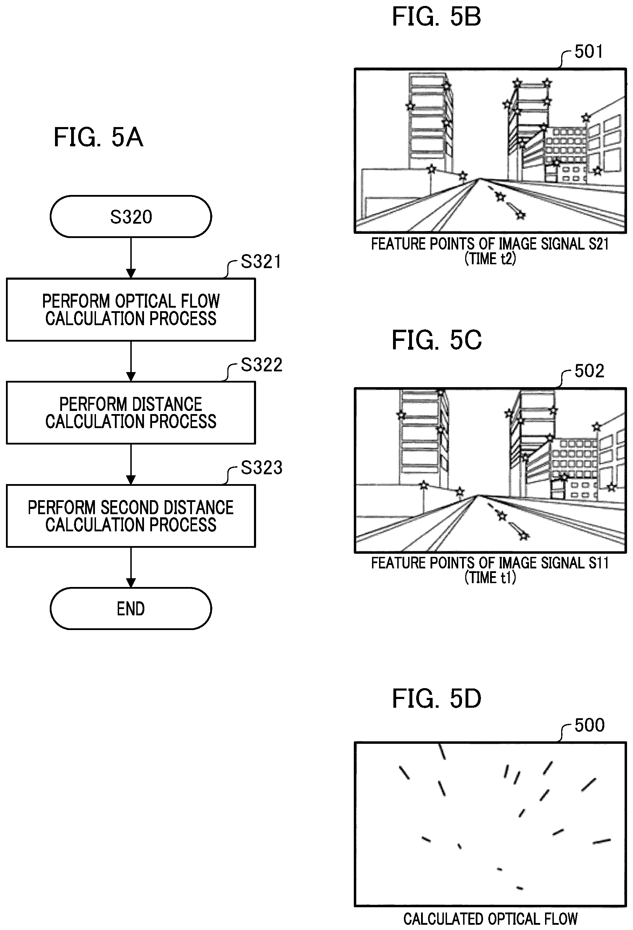

Fig. 5A is a flowchart illustrating an example of a second acquisition step in which a CPU of the distance measurement device 110 acquires second distance information using a second acquisition unit 320 in step S320. Fig. 5B is a diagram illustrating, with stars, feature points 501 calculated for a first image signal S21 at time t2. Fig. 5C is a diagram illustrating, with stars, feature points 502 calculated for a first image signal S11 at time t1, and Fig. 5D is a diagram illustrating a calculated optical flow.

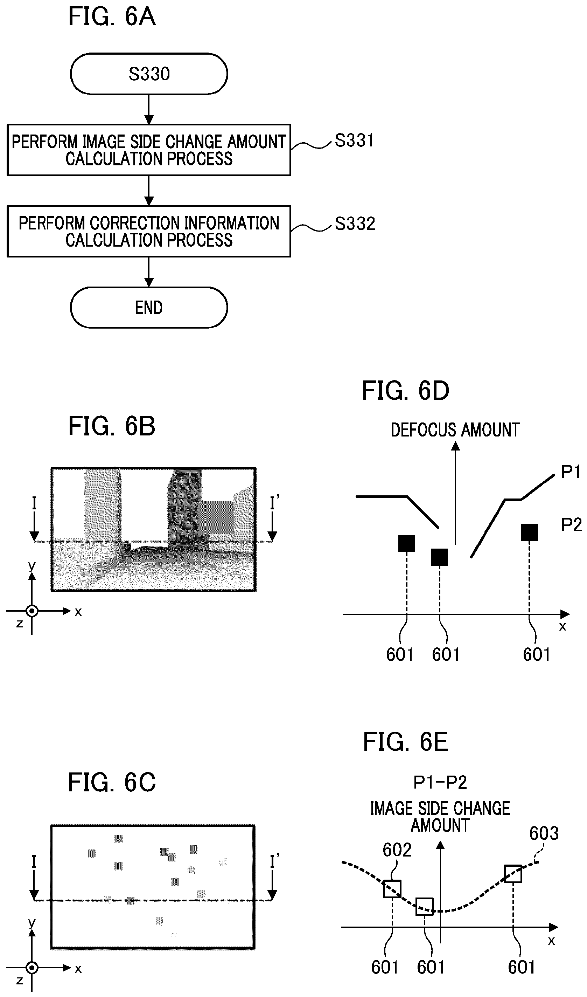

Fig. 6A is a flowchart illustrating an example of the operation of a first correction value generation process performed by a first correction value generation unit 330 in step S330. Fig. 6B is a diagram illustrating an example of a defocus amount d1, which is first distance information Idist1 acquired by a first acquisition unit 310, with respect to an assumed image plane. Fig. 6C is a diagram illustrating an example of a defocus amount d2, which is second distance information Idist2 acquired by the second acquisition unit 320, with respect to an assumed image plane. Fig. 6D is a diagram illustrating an example of an image side defocus amount along I-I' in Figs. 6B and 6C, and Fig. 6E is a diagram illustrating an example of the image side change amount calculated by fitting with a dashed line.

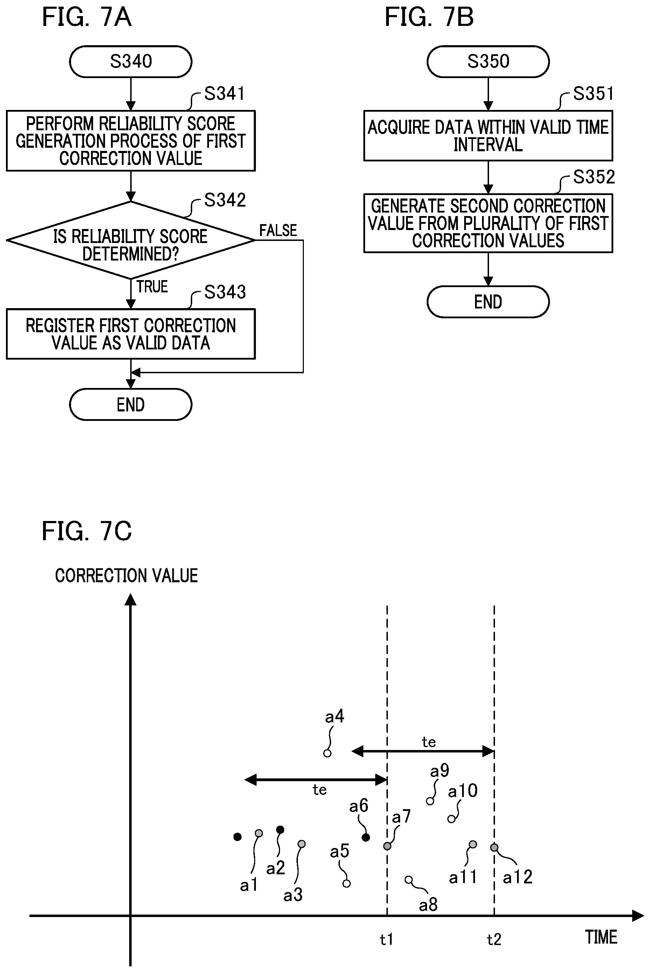

Fig. 7A is a flowchart illustrating an example of a reliability score determination process of a first correction value performed by a reliability score determination unit 340 in step S340, and Fig. 7B is a flowchart illustrating an example of a generation process of a second correction value in step S350. Fig. 7C is a diagram for describing an example of a method for generating a second correction value.

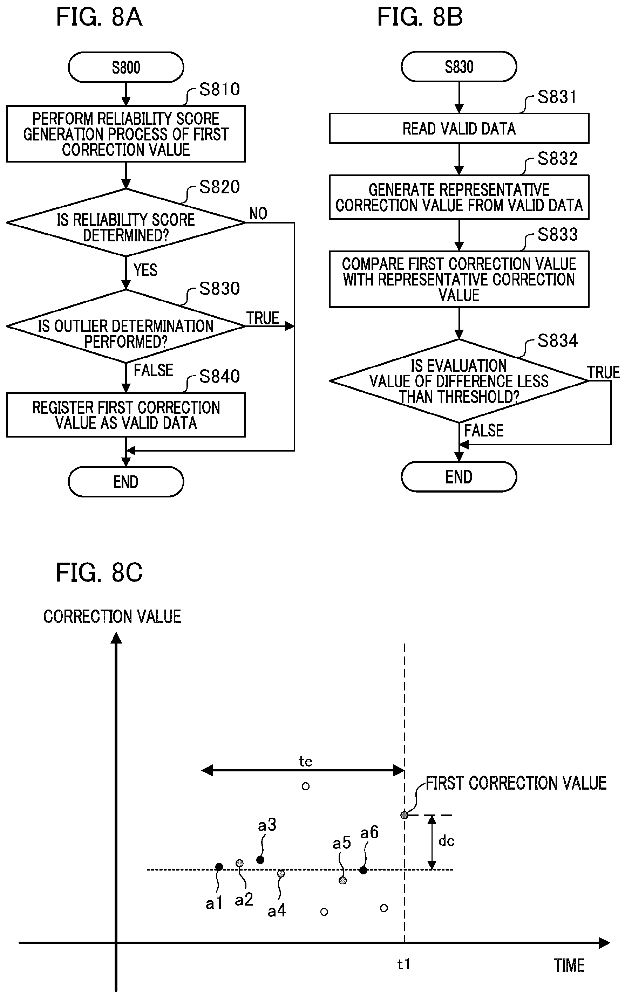

Fig. 8A is a flowchart illustrating an example of a flow of determining a reliability score in a second embodiment, Fig. 8B is a flowchart illustrating an example of a flow of outlier determination, and Fig. 8C is a diagram for specifically describing the example of the flow of outlier determination.

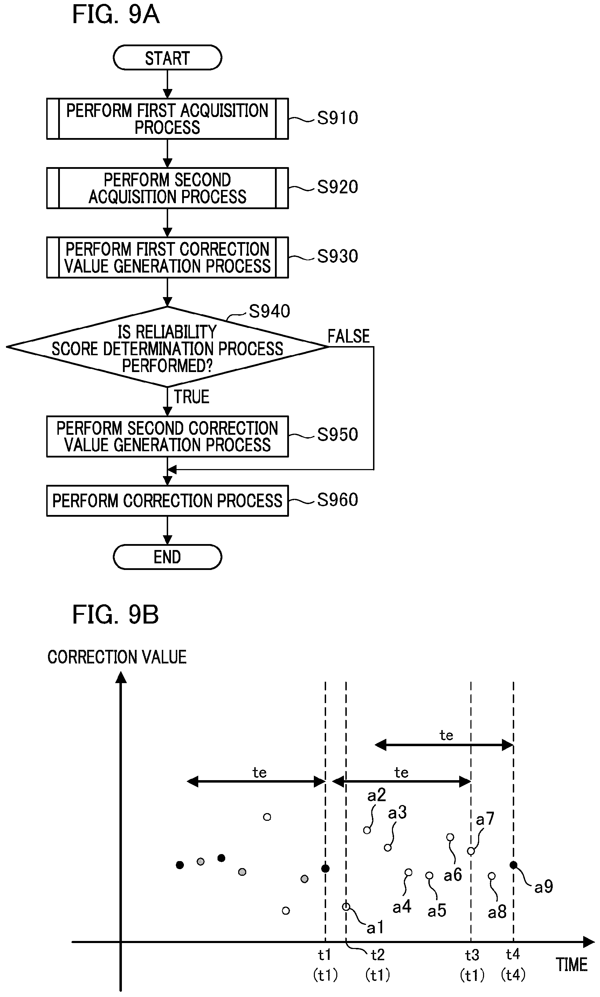

Fig. 9A is a flowchart illustrating an example of the operation of a distance measurement device 110 according to a third embodiment, and Fig. 9B is a diagram for describing the effect of the third embodiment.

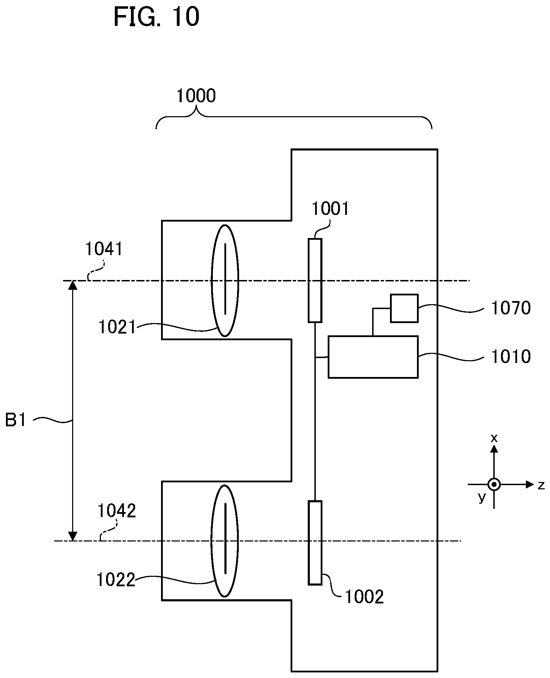

Fig. 10 is a diagram schematically illustrating an example of the configuration of a distance measurement device according to a fourth embodiment.

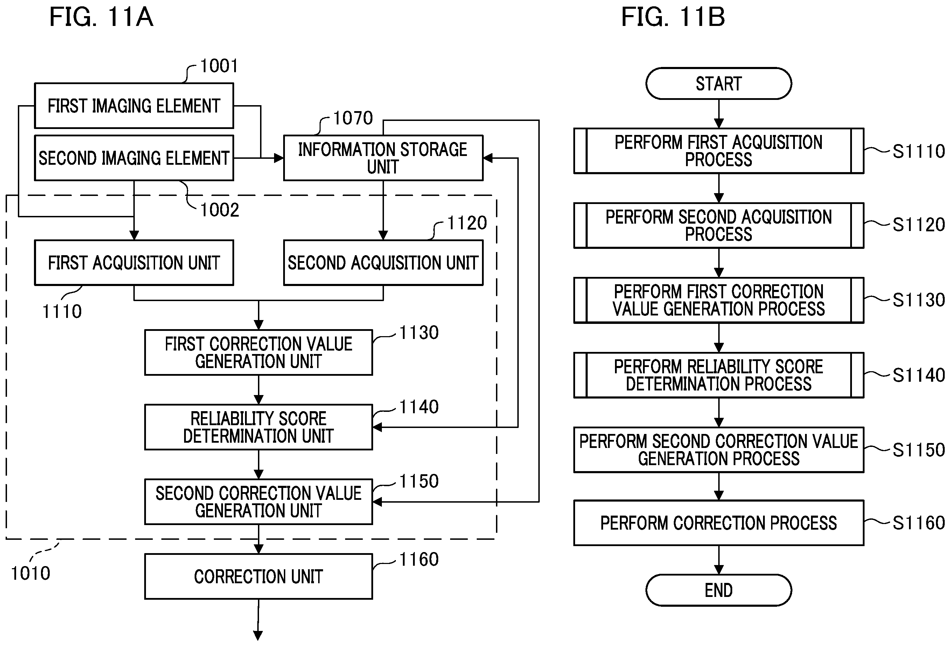

Fig. 11A is a functional block diagram illustrating an example of the configuration of a distance measurement device 1010 according to the fourth embodiment, and Fig. 11B is a flowchart illustrating an example of the operation of the distance measurement device 1010.

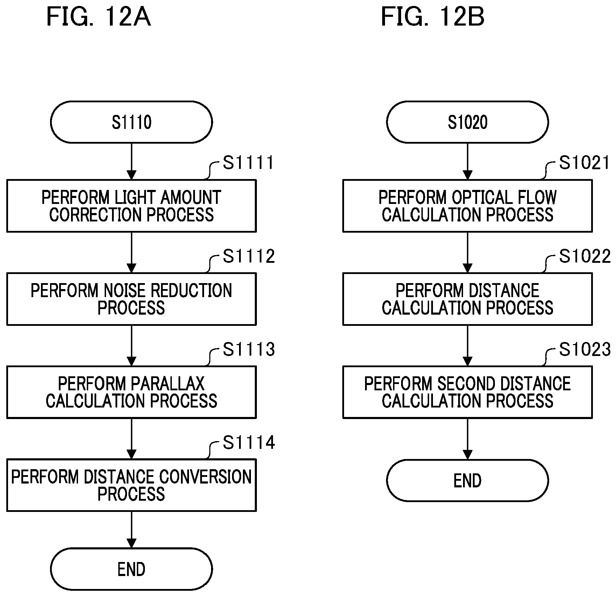

Fig. 12A is a flowchart illustrating an example of the operation of a second acquisition process according to the fourth embodiment, and Fig. 12B is a flowchart illustrating an example of a process for calculating an optical flow.

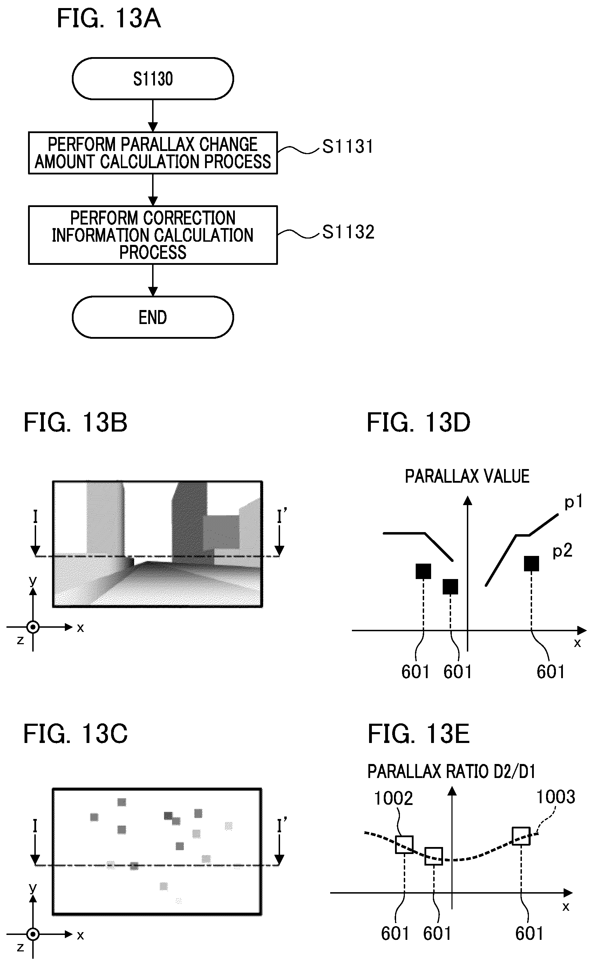

Fig. 13A is a flowchart illustrating an example of the operation of a second correction value generation process according to the fourth embodiment. Fig. 13B is a diagram illustrating an example of a parallax amount D1, which is first distance information Idist1 acquired by a first acquisition unit 1110, and Fig. 13C is a diagram illustrating an example of a parallax amount D2, which is second distance information Idist2 acquired by a second acquisition unit 1120. Fig. 13D is a diagram illustrating an example of the parallax amount along I-I' in Figs. 13B and 13C. Fig. 13E is a diagram illustrating an example of data 1003 obtained by interpolating between angles of view.

DESCRIPTION OF THE EMBODIMENTS

Hereinafter, with reference to the accompanying drawings, favorable modes of the present disclosure will be described using Embodiments. In each diagram, the same reference signs are applied to the same members or elements, and duplicate description will be omitted or simplified.

In the following embodiment, an example of an imaging apparatus mounted on an automobile as a movable apparatus will be described. However, the movable apparatus is not limited to an automobile and includes any movable device. That is, the movable apparatus includes, for example, an automated guided vehicle (AGV), an autonomous mobile robot (AMR), a cleaning robot, a drone, and the like.

Furthermore, the imaging apparatus may be an electronic device having an imaging function, such as a digital still camera, a digital movie camera, a smartphone with a camera, a tablet computer with a camera, a network camera, a drone camera, or a camera mounted on a robot.

<First Embodiment>

In a first embodiment, distance values acquired by different methods are converted into image plane defocus amounts and compared, thereby calculating the change amount in the amount of field curvature over time as a first correction value. In addition, a reliability score is determined within a valid time interval, and the first correction value determined to be reliable is used to create a second correction value, thereby increasing the reliability of the correction value.

Fig. 1A is a diagram schematically illustrating an example of the configuration of an imaging apparatus according to a first embodiment of the present disclosure. In Fig. 1A, an imaging apparatus 100 includes an image forming optical system 120, an imaging element 101, a distance measurement device 110, and an information storage unit 170. The distance measurement device 110 can be configured using a logic circuit or the like.

As another embodiment of the distance measurement device 110, the device may have a central processing unit (CPU) and a memory for storing a calculation processing program, and the CPU serving as a computer may execute the computer program stored in the memory.

The image forming optical system 120 is an imaging lens or the like of the imaging apparatus 100, and forms an image of a subject on the light receiving surface of the imaging element 101. The image forming optical system 120 is configured of a plurality of lens groups (not illustrated), and has an exit pupil 200 at a position spaced a predetermined distance from the imaging element 101. In the present specification, a z-axis is parallel to an optical axis 140 of the image forming optical system 120. Furthermore, an x-axis and a y-axis are perpendicular to each other and to the optical axis.

The imaging element 101 in the present embodiment is configured of a CMOS, a CCD, or the like, and is an imaging element having a distance measurement function using an imaging plane phase difference distance measurement method. The subject image formed on the imaging element 101 via the image forming optical system 120 is photoelectrically converted by the imaging element 101 to generate an image signal based on the subject image.

Moreover, a color image can be generated by subjecting the acquired image signal to a development process by the image generation unit. Moreover, the generated color image can be stored in an image storage unit (not illustrated).

Fig. 1B is an xy cross-sectional view of the imaging element 101 in Fig. 1A. The imaging element 101 is configured by arranging a plurality of pixel groups 150 in 2 rows and 2 columns. In the pixel group 150, green pixels 150G1 and 150G2 are arranged in a diagonal direction, and a red pixel 150R and a blue pixel 150B are disposed in the other two pixels.

Fig. 1C is a diagram schematically illustrating the I-I' cross section of the pixel group 150 in Fig. 1B. Each pixel is configured of a light receiving layer 182 and a light guiding layer 181. In the light receiving layer 182, two photoelectric conversion units (a first photoelectric conversion unit 161 and a second photoelectric conversion unit 162) for photoelectrically converting received light are disposed.

In the light guiding layer 181, microlenses 183 for efficiently guiding the light flux incident on the pixel to the photoelectric conversion unit, color filters (not illustrated) that pass light of a predetermined wavelength band, wiring (not illustrated) for reading images and driving pixels, and the like are disposed.

In the examples illustrated in Figs. 1B and 1C, an example of a photoelectric conversion unit divided into two in one pupil division direction (x-axis direction) is illustrated, but a photoelectric conversion unit divided into two pupil division directions (x-axis direction and y-axis direction) may be provided, and the pupil division direction and number of divisions are arbitrary.

Furthermore, the color combinations received by each pixel are not limited to the example illustrated in Fig. 1B, and some pixels may be able to detect infrared (IR) and white light, etc., and filters with desired spectral characteristics may be disposed for each pixel in the desired arrangement.

The light receiving layer 182 has a photoelectric conversion unit formed using a semiconductor or the like that has sensitivity to the wavelength band to be detected, and when the wavelength band to be detected is in the visible range, a material such as Si is used, but the present disclosure is not limited thereto and the layer is formed from any material depending on the target wavelength band.

Next, the principle of distance measurement by the pupil division imaging plane phase difference distance measurement method using the imaging element 101 of the present embodiment will be described.

Fig. 2A is a diagram illustrating the relationship between the exit pupil of the image forming optical system 120 and the light receiving unit of the imaging element 101 according to the first embodiment. Only the exit pupil 200 of the image forming optical system 120 and a green pixel 150G1 as a representative example of pixels disposed in the imaging element 101 are illustrated. The exit pupil 200 and the light receiving layer 182 are optically conjugate with each other due to the microlens 183 in the green pixel 150G1 illustrated in Fig. 2A

As a result, as illustrated in Fig. 2A, the light flux that has passed through a first pupil region 210 in the exit pupil 200 is incident on the first photoelectric conversion unit 161. On the other hand, the light flux that has passed through a second pupil region 220 is incident on the second photoelectric conversion unit 162.

A signal from a plurality of first photoelectric conversion units 161 provided in each pixel photoelectrically converts the received light flux to generate a first image signal. Similarly, a signal from a plurality of second photoelectric conversion units 162 provided in each pixel photoelectrically converts the received light flux to generate a second image signal.

From the first image signal, the intensity distribution of the image formed on the imaging element 101 by the light flux that mainly passed through the first pupil region 210 can be obtained, and from the second image signal, the intensity distribution of the image formed on the imaging element 101 by the light flux that mainly passed through the second pupil region 220 can be obtained.

The parallax amount between the first image signal and the second image signal corresponds to the defocus amount. Figs. 2B to 2D are diagrams for describing the relationship between the parallax amount and the defocus amount due to the imaging element 101 and the image forming optical system 120 of the first embodiment. In the drawing, reference numeral 211 denotes a first light flux passing through the first pupil region 210, and reference numeral 221 denotes a light flux passing through the second pupil region 220.

Fig. 2B is a diagram illustrating a state during focusing, where a first light flux 211 and a second light flux 221 converge on the imaging element 101. At this time, the amount of relative positional deviation between the first image signal formed by the first light flux 211 and the second image signal formed by the second light flux 221 is 0.

Fig. 2C is a diagram illustrating a state where the image side is defocused in the negative direction of the z-axis. At this time, the amount of relative positional deviation between the first image signal formed by the first light flux and the second image signal formed by the second light flux is not 0 but has a negative value.

Fig. 2D is a diagram illustrating a state where the image side is defocused in the positive direction of the z-axis. At this time, the amount of relative positional deviation between the first image signal formed by the first light flux and the second image signal formed by the second light flux is not 0 but has a positive value.

From comparison between Figs. 2C and 2D, it can be seen that the direction of the positional deviation changes depending on whether the defocus amount is positive or negative. It can also be seen that the parallax amount changes according to the defocus amount. Therefore, the parallax amount between the first image signal and the second image signal can be detected by a region-based matching technique, as described below, and the detected parallax amount can be converted into a defocus amount via a predetermined conversion coefficient.

In this manner, in the present embodiment, a plurality of image signals having parallax are acquired by a single imaging element from two light fluxes that have passed through different pupil regions of a single optical system, and first distance information is acquired based on the plurality of image signals.

Furthermore, as described later, the image side defocus amount can be converted into a distance from the subject to the imaging apparatus 100 (hereinafter, a subject distance) using Equation 2. Alternatively, a plurality of image signals having parallax may be acquired by a plurality of imaging elements, such as a stereo camera, and the first distance information may be acquired based on the plurality of image signals.

A distance measurement device 110 according to the present embodiment will be described. Fig. 3A is a functional block diagram illustrating an example of the configuration of a distance measurement device 110 according to the first embodiment. In addition, some of the functional blocks illustrated in Fig. 3A are realized by causing a CPU or the like (not illustrated) serving as a computer included in the distance measurement device 110 to execute a computer program stored in a memory (not illustrated) serving as a storage medium.

However, some or all of these may be realized by hardware. As the hardware, a dedicated circuit (ASIC) or a processor (a reconfigurable processor, DSP), etc. can be used.

Furthermore, the respective functional blocks illustrated in Fig. 3A do not have to be built in the same housing, and may be configured as separate devices connected to each other via signal paths. The above description regarding Fig. 3A also applies to Fig. 11A.

The distance measurement device 110 acquires first distance information Idist1 in a first acquisition unit 310 and acquires second distance information Idist2 in a second acquisition unit 320. In the present embodiment, the first acquisition unit acquires first distance information using an imaging element having a distance measurement function using an imaging plane phase difference distance measurement method, as described above.

The first acquisition unit 310 acquires first distance information including errors (time-dependent errors of the imaging apparatus, manufacturing errors) via the image forming optical system 120, and the second acquisition unit 320 acquires second distance information whose error is less than the error of the first distance information. The error includes a time-dependent error and a manufacturing error, but the following embodiment mainly describes a time-dependent error.

A first correction value generation unit 330 acquires a first correction value Ic1 from the first distance information Idist1 and the second distance information Idist2. That is, the first correction value generation unit 330 calculates a first correction value Ic1 for correcting a time-dependent error of the first distance information based on the second distance information.

A reliability score determination unit 340 calculates a reliability score indicating the reliability of the first correction value Ic1 and determines the reliability of the first correction value based on the reliability score. If it is determined that the first correction value Ic1 is reliable, the first correction value Ic1 is registered as valid data.

A second correction value generation unit 350 generates a second correction value Ic2 by using the correction value within a predetermined valid time interval, out of the first correction values Ic1 registered as the valid data. That is, the second correction value generation unit 350 generates a second correction value from the first correction value whose reliability score is equal to or greater than a predetermined threshold and which is acquired within a predetermined valid time interval.

Furthermore, a correction unit 360 corrects the first distance information Idist1 using the second correction value Ic2 to generate and output corrected distance information IdistC.

Next, the processing contents performed by the first acquisition unit 310, the second acquisition unit 320, the first correction value generation unit 330, the reliability score determination unit 340, the second correction value generation unit 350, and the correction unit 360 will be described with reference to Figs. 3B and 3C.

Fig. 3B is a flowchart illustrating an example of the operation of the distance measurement device 110, and Fig. 3C is a flowchart illustrating an example of a part of the operation of Fig. 3B. The operation of each step in the flowcharts of Figs. 3B and 3C is performed in sequence by a CPU or the like serving as a computer within the distance measurement device 110 executing a computer program stored in a memory.

In step S310 in Fig. 3B, the CPU of the distance measurement device 110 performs a first acquisition process using a first image group Sg1 acquired from the imaging element 101 using the first acquisition unit 310. Then, the first distance information Idist1 indicating the distance to the subject is acquired. Here, step S310 functions as a first acquisition step of acquiring first distance information.

The first image group Sg1 includes a first image signal S11 generated by the first photoelectric conversion unit 161 and a second image signal S12 generated by the second photoelectric conversion unit 162. The specific processing contents of the first acquisition process in step S310 in Fig. 3B will be described below with reference to Fig. 3C

In step S311, the CPU of the distance measurement device 110 corrects the light amount difference between the first image signal S11 and the second image signal S12 using the first acquisition unit 310. That is, due to the image forming optical system 120, the balance of the light amounts between the first image signal S11 and the second image signal S12 is lost.

In step S311, the CPU of the distance measurement device 110 uses the light amount correction value stored in the information storage unit 170 to perform a light amount correction process between the first image signal S11 and the second image signal S12.

It is not always necessary to use the light amount correction value stored in the information storage unit 170. For example, after a light amount correction value is generated from the area ratio between the first pupil region 210 and the second pupil region 220, light amount correction may be performed.

In step S312, the CPU of the distance measurement device 110 performs a noise reduction process using the first acquisition unit 310 to reduce noise generated in the imaging element 101. Specifically, the first image signal S11 and the second image signal S12 are subjected to filtering using a band-pass filter.

In general, the higher the spatial frequency band, the lower the S/N ratio (ratio of signal components to noise components) and the relatively larger the noise components. Therefore, a low-pass filter is used, which has a lower pass rate as the frequency increases.

Even after the light amount correction process in step S311, the optical characteristics of the image forming optical system 120 may not necessarily match the design values due to manufacturing errors of the image forming optical system 120 and the like. For this reason, for example, a band-pass filter or the like is used, which has a pass rate of 0 for the frequency band where spatial frequency = 0 and a low pass rate for high frequency bands.

In step S313, the CPU of the distance measurement device 110 performs a parallax calculation process using the first acquisition unit 310 to calculate the parallax amount between the first image signal S11 and the second image signal S12. Specifically, a point of interest is set in the first image signal S11, and a collation region centered on the point of interest is set. The collation region is, for example, a rectangle with a side of a predetermined length centered on the point of interest, but the present disclosure is not limited thereto.

Next, a reference point is set in the second image signal S12, and a reference region centered on the reference point is set. The reference region is the same size and shape as the collation region. The degree of correlation between the first image signal S11 included in the collation region and the second image signal S12 included in the reference region is calculated while sequentially moving the reference point, and the reference point with the highest correlation is determined as the corresponding point of the point of interest. The amount of relative positional deviation between the point of interest and the corresponding point is the parallax amount at the point of interest.

The first acquisition unit 310 calculates the parallax amount while sequentially changing the point of interest, thereby being able to calculate the parallax amount at a plurality of pixel positions. Any known method may be used as a method for calculating the degree of correlation.

In other words, as a method for calculating the degree of correlation, for example, a method called normalized cross-correlation (NCC) can be used, which evaluates the normalized cross-correlation between image signals. Alternatively, sum of squared difference (SSD), which evaluates the sum of the squares of the image signal differences, or sum of absolute difference (SAD), which evaluates the absolute value of the differences, may be used.

Furthermore, in the present embodiment, reliability information indicating the reliability of the calculated distance information is generated using the texture amount and frequency component information of each pixel block obtained when using these methods for calculating the degree of correlation.

In step S314, the CPU of the distance measurement device 110 performs a distance conversion process. That is, the first acquisition unit 310 converts the parallax amount into the distance (defocus amount) from the imaging element 101 to the image-forming point of the image forming optical system 120 using a predetermined conversion coefficient. Here, the coefficient for converting the parallax amount into the defocus amount is called a BL value. When the BL value is BL, the defocus amount is ΔL, and the parallax amount is d, the parallax amount d can be converted into the defocus amount ΔL using the following Equation 1.

$$\Delta L = BL \times d \ ... \ (Equation \ 1)$$

The first acquisition unit 310 converts the parallax amount at a plurality of pixel positions into a defocus amount, thereby acquiring first distance information Idist1 including the defocus amounts at the plurality of pixel positions as distance information.

Furthermore, in order to convert this defocus amount into a subject distance, the following Equation 2, which is a lens formula in geometric optics, can be used.

$$1/A + 1/B = 1/f \ ... \ (Equation \ 2)$$

A: Distance from the object surface to the principal point of the image forming optical system 120
B: Distance from the principal point of the image forming optical system 120 to the image plane
f: Focal length of the image forming optical system 120

In Equation 2, the focal length is a known value. Moreover, the value of B can be calculated using the defocus amount. Therefore, the distance A to the object surface, that is, the subject distance, can be calculated using the focal length and the defocus amount. This method of acquiring distance information of a subject is called a phase difference distance measurement method, and in particular, the method of acquiring distance information based on signals acquired from different pupil regions of a single optical system is called a pupil division phase difference method.

In addition, in the above Equation 2, when the distance B from the principal point of the image forming optical system 120 to the image plane obtained using the calculated defocus amount contains an error, the distance A to the object surface, that is, the subject distance, calculated from Equation 2 will also contain an error.

An error in the distance B may be caused by changes in the imaging apparatus 100 due to the influence of changes in the surrounding temperature and humidity, vibrations, and the like. Specifically, an error in the distance B is caused by changes in optical characteristics due to changes in the refractive index and curvature of each lens of the image forming optical system 120 in response to changes in the surroundings, and deformations such as bending of the imaging element 101 due to changes in the surroundings. Additionally, an error in the distance B occurs due to manufacturing errors and changes over time.

Due to a difference between the assumed image plane position of the image forming optical system 120 and the actual imaging position, the conversion relationship between the defocus amount and the distance from the object surface to the principal point of the image forming optical system 120 is disrupted, and an error occurs in the value of the distance B from the principal point of the image forming optical system 120 to the image plane.

Hereinafter, the difference between the assumed image plane position of the image forming optical system 120 and the actual image forming plane position will be referred to as the image side change amount. Even when the image side change amount is not 0, the relationship between the defocus amount and the object distance follows Equation 2, and therefore, if the defocus amount is corrected using a correctly estimated image side change amount, it is possible to obtain the distance A, which is the subject distance with a reduced error.

As described above, the first acquisition unit 310 acquires first distance information based on the first signal and the second signal having parallax output from the imaging element 101 via the image forming optical system. The number of signals having parallax may be three or more. Furthermore, when the first distance information is acquired using such a pupil division phase difference method, as described above, the first distance information contains errors due to changes in the characteristics of the image forming optical system and the imaging element over time, changes in temperature, etc.

Fig. 4A is a diagram illustrating an example of a two-dimensional distribution of the amount of field curvature of the image forming optical system 120 within the effective pixel range of the imaging element 101, and Fig. 4B is a diagram illustrating an example of the amount of field curvature along line I-I' in Fig. 4A.

In Fig. 4B, m1 represents the amount of field curvature when no change occurs over time or with temperature, and m2 represents the amount of field curvature when a change occurs over time or with temperature. The difference between m1 and m2 in the drawing is the aforementioned image side change amount. Fig. 4C is a diagram illustrating an example of the image side change amount along I-I' in Fig. 4A

As illustrated in Fig. 4C, when changes occur in the optical characteristics of the image forming optical system 120 over time or due to changes in temperature, the image side change amount changes according to the angle of view. When the image side change amount is a constant value independent of the angle of view, correction can be performed if there is at least one piece of correction information. However, when the image side change amount changes according to the angle of view as illustrated in Fig. 4C, it is difficult to estimate the image side change amount using only one piece of correction information.

In such a case, it is necessary to estimate a two-dimensional distribution of the image side change amount as illustrated in Fig. 4C. In order to generate the first correction value Ic1, in the present embodiment, as described above, the first correction value Ic1 is generated using second distance information acquired by an acquisition unit different from the first acquisition unit.

That is, in the present embodiment, as described above, the first acquisition unit 310 acquires the first distance information Idist1 indicating the distance to the subject, using the first image group Sg1 acquired from the imaging element 101.

Furthermore, the first acquisition unit 310 temporarily stores the first image group Sg 1 acquired from the imaging element 101 in the information storage unit 170. The second acquisition unit 320 uses the first image group Sg1 stored in the information storage unit 170 as a second image group Sg2 to acquire second distance information Idist2. Here, the second image group Sg2 is an image group in which image signals at a time earlier than that of the first image group Sg1 are stored in the information storage unit 170.

The second acquisition unit 320 performs a second acquisition process to acquire second distance information Idist2 using the first image group Sg1 of the first frame and the second image group Sg2 of the second frame. Moreover, the second acquisition unit acquires second distance information based on image signals of two frames in the present embodiment. However, the second distance information may be acquired based on image signals of three or more frames.

The first image group Sg1 includes a first image signal S11 and a second image signal S12 captured by the imaging apparatus 100. The second image group Sg2 includes a first image signal S21 and a second image signal S22 captured by the imaging apparatus 100 at a timing different from that of the first image group Sg1.

Here, the first image signals S11 and S21 are image signals generated by the first photoelectric conversion unit 161, and the second image signals S12 and S22 are image signals generated by the second photoelectric conversion unit 162.

In addition, the second acquisition unit 320 acquires the second distance information Idist2 using the structure from motion (SfM) method, which is a known method. Hereinafter, the specific contents of a second acquisition step in which the CPU of the distance measurement device 110 acquires second distance information using the second acquisition unit 320 in step S320 will be described with reference to Fig. 5A.

Fig. 5A is a flowchart illustrating an example of a second acquisition step in which the CPU of the distance measurement device 110 acquires second distance information using the second acquisition unit 320 in step S320. The operation of each step in the flowchart of Fig. 5A is performed in sequence by a CPU or the like serving as a computer within the distance measurement device 110 executing a computer program stored in a memory.

In step S321, the CPU of the distance measurement device 110 performs an optical flow calculation process using the second acquisition unit 320. That is, the second acquisition unit 320 acquires a first image signal S11 from the first image group Sg1 of the first frame acquired at time t1 stored in the information storage unit 170. Also, a first image signal S21 is acquired from a second image group Sg2 of the second frame captured at different time t2.

Then, the optical flow is calculated using a known method based on the first image signal S11 of the first image group Sg1 and the first image signal S21 of the second image group Sg2. The time relationship is t1 > t2, and t2 is a time earlier than t1.

Furthermore, the plurality of images for which the optical flow is calculated need only be image signals from the same viewpoint, and the optical flow may be calculated based on the second image signal S12 of the first image group Sg1 and the second image signal S22 of the second image group Sg2.

Alternatively, the optical flow may be calculated based on a composite image signal obtained by adding together the first image signal S11 and the second image signal S12 of the first image group Sg1, and a composite image signal obtained by adding together the first image signal S21 and the second image signal S22 of the second image group Sg2.

The calculation of the optical flow will be specifically described with reference to Figs. 5B to 5D. Feature points are calculated for the acquired first image signal S11 and first image signal S21 using the Harris corner detection algorithm, which is a known method.

Fig. 5B is a diagram illustrating, with stars, feature points 501 calculated for the first image signal S21 at time t2, Fig. 5C is a diagram illustrating, with stars, feature points 502 calculated for the first image signal S11 at time t1, and Fig. 5D is a diagram illustrating the calculated optical flow.

In Fig. 5D, reference numeral 500 denotes an optical flow calculated by matching feature points between the calculated first image signal S21 and the first image signal S11 using the Kanade-Lucas-Tomasi (KLT) feature tracking algorithm, which is a known method.

The algorithms used for calculating the feature points and feature amounts and for calculating the optical flow are not limited to the above methods. Features from Accelerated Segment Test (FAST), Binary Robust Independent Elementary Features (BRIEF), or the like may also be used. Alternatively, Oriented FAST and Rotated BRIEF (ORB) may be used.

In step S322, the CPU of the distance measurement device 110 performs a distance calculation process. That is, the calculated optical flow 500 is used to calculate the distance to the subject using a known method. The coordinates in an image coordinate system of a subject for calculating a distance are (u, v), the optical flow of the subject for calculating the distance is ($\Delta$u, $\Delta$v), and the distance to the subject is z.

The camera movement amounts between images used in calculating the optical flow are defined as the rotational movement amount ($\omega$x, $\omega$y, $\omega$z) and the translational movement amount (tx, ty, tz). If the focal length of the camera is f, the relationships of the following Equations 3 and 4 hold.

$$\Delta u = -\omega_y f - \frac{t_x f}{z} + \frac{t_z}{z} u + \omega_z v + \frac{\omega_x}{f} uv - \frac{\omega_y}{f} u^2$$

$$\dots \text{(Equation 3)}$$

$$\Delta v = \omega_x f - \frac{t_y f}{z} + \frac{t_z}{z} v + \omega_z u + \frac{\omega_y}{f} uv - \frac{\omega_x}{f} v^2$$

$$\dots \text{(Equation 4)}$$

The focal length f of the camera is known in advance through prior calibration or the like. Therefore, by finding the camera movement amounts, that is, the rotational movement amount ($\omega$x, $\omega$y, $\omega$z) and the translational movement amount (tx, ty, tz), the distance z from the camera to the subject at the subject position (u, v) on the image can be calculated from the optical flow.

Then, the camera movement amount between the first image signal S21 and the first image signal S11 used in calculating the optical flow 500 is calculated using a known method. Specifically, a camera fundamental matrix F is acquired using the 8Point algorithm to satisfy the epipolar constraint using the feature point 501 at time t2, the feature point 502 at time t1, and the optical flow 500 which is their correspondence relationship.

In this case, it is desirable to also use the random sample consensus (RANSAC) method to efficiently eliminate outliers and perform calculations using a stable method.

The camera fundamental matrix F is decomposed into a camera fundamental matrix E using a known method, and the camera external parameters, that is, the rotational movement amount R ($\omega$x, $\omega$y, $\omega$z) and the translational movement amount T (tx, ty, tz), are obtained from the camera fundamental matrix E.

Here, the obtained camera external parameters are relative displacements of the camera movement amount from time t2 to time t1, and since the scaling is indefinite, the translational movement amount T (tx, ty, tz) in particular is a normalized relative value. This is scaled to obtain the translational movement amount T (tx, ty, tz), which is the actual movement amount.

Specifically, a second image signal S12 corresponding to an image signal from a different viewpoint at the same time as the first image signal S11 from which the feature points 502 have been obtained is acquired from the information storage unit 170. Similarly, a second image signal S22 corresponding to an image signal from a different viewpoint at the same time as the first image signal S21 from which the feature points 501 have been obtained is acquired from the information storage unit 170.

Then, in step S310, a first acquisition process is performed on each image pair to acquire distance values from first distance information based on the parallax amount. Thereafter, the translational movement amount T, that is, the movement amount tz parallel to the optical axis of the camera, is acquired from the difference in distance value between the feature point 502 and the feature point 501 that are associated by the optical flow.

Other components are also scaled from the acquired actual movement amount tz, which has also been scaled, to acquire the actual translational movement amount T(tx, ty, tz) from time t2 to t1. Then, using Equation 3 and Equation 4, the distance z from the camera to the feature point 502 of the first image signal S11 at each coordinate on the image is calculated.

The method for scaling the camera movement amount is not limited thereto method. For example, scaling may be performed using measuring equipment such as an inertial measurement unit (IMU) or a global navigation satellite system (GNSS). Alternatively, in the case of an in-vehicle camera, the camera movement amount may be obtained from vehicle speed information, GPS information, or the like, and scaling may be performed based on the camera movement amount.

Note that bundle adjustment, which is a known method, may be used to calculate the camera movement amount and the positional relationship between the subject and the camera. The relationships between variables, including internal camera parameters such as focal length, camera fundamental matrices, and optical flow, can be analytically calculated using the nonlinear least squares method to ensure good consistency.

Of the feature points used to calculate the camera movement amount, feature points calculated from a subject that is not a stationary object with respect to the world coordinate system to which the imaging apparatus belongs may be excluded from the processing. In the known method of estimating the camera movement amount, various parameters are calculated assuming that the subject is a stationary object, and therefore, when the subject is a moving object, this becomes a source of error.

Therefore, by excluding feature points calculated from moving objects, the accuracy of calculating various parameters can be improved. The moving object is determined based on the classification of the subject using image recognition technology. Alternatively, a moving object may be determined by comparing the change amount in the acquired distance information in time series with the relative value of the movement amount of the imaging apparatus.

In step S323, the CPU of the distance measurement device 110 performs a second distance calculation process. That is, the distance from the camera at each coordinate on the image of the feature point 502 of the first image signal S11 acquired as described above is converted into an image side defocus amount using Equation 2, and the second distance information Idist2 is calculated.

In this manner, the second acquisition unit acquires second distance information by calculating the optical flow of the target feature points from a plurality of image signals.

The first correction value generation unit 330 generates and acquires a first correction value Ic1 corresponding to the image side change amount based on the first distance information Idist1 and the second distance information Idist2. A method for generating a first correction value Ic1 corresponding to the image side change amount from the first distance information Idist1 and the second distance information Idist2 will be described below.

The first distance information Idist1 is derived based on the parallax amount calculated in the first acquisition unit, and the parallax amount corresponds to the interval between the centers of gravity of the first light flux and the second light flux based on the positional relationship between the image forming plane of the image forming optical system and the imaging element, as illustrated in Figs. 2B to 2D.

Therefore, if the shape of the image forming plane of the image forming optical system or the imaging element changes due to changes in the surrounding environment such as temperature and humidity, the value will be different from that before the change due to the influence of the changes. That is, the first distance information Idist1 calculated in the first acquisition unit is easily affected by changes in the optical system over time, changes in the environment, and the like.

On the other hand, the second distance information Idist2 is calculated from an optical flow based on an image group acquired at a time interval that is much shorter than the time interval at which changes in the surrounding environment such as temperature and humidity and changes over time occur.

Therefore, since the first distance information used when calculating the second distance information also uses relative changes over a short time interval as the camera movement amount, the amount of error over time due to changes in the surrounding environment such as temperature and humidity and changes over time can be almost negligible. That is, the second distance information Idist2 calculated in the second acquisition unit is much less affected by environmental changes and changes over time in the optical system than the first distance information Idist1.

However, the second distance information Idist2 is information that depends on the coordinates at which the feature points are calculated, and is therefore distance information that is sparse with respect to the angle of view.

Therefore, in the present embodiment, the second distance information Idist2 is used to calculate a first correction value Ic1 that corresponds to the image side change amount caused by changes in the surrounding environment and changes over time. That is, by correcting the first distance information Idist1 to calculate the corrected distance information IdistC, it is possible to reduce the amount of error over time and acquire distance information that is dense with respect to the angle of view. If dense distance information can be acquired, it becomes possible to measure the detailed shape of an object.

Fig. 6A is a flowchart illustrating an example of the operation of a first correction value generation process performed by the first correction value generation unit 330 in step S330. Here, step S330 functions as a first correction value generation step of calculating a first correction value for correcting the first distance information based on the second distance information.

The operation of each step in the flowchart of Fig. 6A is performed in sequence by a CPU or the like serving as a computer within the distance measurement device 110 executing a computer program stored in a memory.

In step S331, the CPU of the distance measurement device 110 performs an image side change amount calculation process to calculate an image side change amount using the first distance information Idist1 acquired by the first acquisition unit 310 and the second distance information Idist2 acquired by the second acquisition unit 320.

Fig. 6B is a diagram illustrating an example of a defocus amount d1, which is the first distance information Idist1 acquired by the first acquisition unit 310, with respect to the assumed image plane. Fig. 6C is a diagram illustrating an example of a defocus amount d2, which is the second distance information Idist2 acquired by the second acquisition unit 320, with respect to the assumed image plane.

In Fig. 6C, since distance information is acquired at the pixel corresponding to the feature point 502, the distance information is a sparse data group corresponding to each coordinate on the image of the feature point 502. Fig. 6D is a diagram illustrating an example of the image side defocus amount along I-I' in Figs. 6B and 6C.

A discontinuous line segment p1 in Fig. 6D indicates a defocus amount d1 which is the first distance information Idist1, and point data p2 in Fig. 6D indicates a defocus amount d2 which is the second distance information Idist2.

As described above, the first distance information Idist1 contains errors due to environmental changes and changes over time of the imaging apparatus 100. On the other hand, the second distance information Idist2 is hardly affected by changes in the imaging apparatus 100 over time. Therefore, if a difference value between the two is calculated, the difference value corresponds to the image side change amount that has been affected by changes over time.

Fig. 6E is a diagram illustrating an example of the image side change amount calculated by fitting with a dashed line. Fig. 6E illustrates the image side change amount obtained by subtracting p2, which is the defocus amount d2 that is the second distance information Idist2, from p1, which is the defocus amount d1 that is the first distance information Idist1 in Fig. 6D.

In the examples illustrated in Figs. 6B to 6E, the p1-p2 difference data 602 can actually be acquired from three points on data acquisition coordinates 601 illustrated in Fig. 6E that correspond to the coordinates of the feature point 502 in Fig. 5C. In contrast, the image side change amount that is affected by environmental changes and changes over time is the change in the focus position at each pixel, that is, it corresponds to the change in the amount of field curvature.

Since the amount of field curvature itself has a continuous and smooth shape, the image side change amount between angles of view, that is, between pixels, is continuous and smoothly connected. Therefore, the difference data 602 acquired on each data acquisition coordinate 601 is used to perform fitting by polynomial approximation, thereby making it possible to interpolate between the angles of view.

An image side change amount 603 thus obtained from polynomial approximation is indicated by a dashed line in Fig. 6E. For the purpose of description, the image side change amount is expressed one-dimensionally along the line segment I-I' using polynomial approximation, but the actual image side change amount is two-dimensional data on the xy plane.

In step S332, the CPU of the distance measurement device 110 performs a correction information calculation process using the first correction value generation unit 330. That is, in step S332, surface fitting by polynomial approximation on the xy plane is performed using the acquired difference data that is discrete with respect to the angle of view, and the image side change amount is estimated. Here, the approximate surface data, which is the calculated image side change amount, is set as a first correction value Ic1.

In this way, the distance value and defocus amount acquired by each acquisition unit may take discrete values depending on the distance of the subject being captured. However, by converting the distance information acquired by each method into an image side defocus amount and obtaining the difference value, it can be treated as a continuous value, and its value and shape can be estimated and acquired using various approximations.

In step S332, when surface fitting by polynomial approximation is performed using the difference data to estimate the image side change amount, it is desirable to remove outliers in the difference data based on the image side change amount estimated from the design values of the image forming optical system, the imaging element, etc. That is, the image side change amount can be predicted in advance by simulating the design values of the apparatus and changes in the environmental temperature and humidity, and changes over time.

This predicted value is stored in an information storage unit as an initial value for correction as a lookup table or the like, and is compared with the acquired difference data. By removing outliers through threshold determination, the fitting accuracy can be improved. That is, the initial value includes an image side change amount based on environmental changes and changes over time, and the first correction value generation unit 330 may acquire an initial value for correction related to the image forming optical system or the imaging element from a lookup table and calculate the correction value.

The reliability score determination unit 340 calculates a reliability score S for the first correction value generated by the first correction value generation unit 330, and determines whether or not the first correction value can be used in the correction process. Here, a method for calculating the reliability score S and a method for determining the first correction value using the reliability score S will be described.

Fig. 7A is a flowchart illustrating an example of a reliability score determination process of the first correction value performed by the reliability score determination unit 340 in step S340. Here, step S340 functions as a reliability score determination step of calculating a reliability score indicating the reliability of the first correction value and determining the reliability of the first correction value based on the reliability score.

The operation of each step in the flowchart of Fig. 7A is performed in sequence by a CPU or the like serving as a computer within the distance measurement device 110 executing a computer program stored in a memory.

In step S341, the CPU of the distance measurement device 110 generates a reliability score S of the first correction value as an index for determining whether or not a satisfactory correction amount can be acquired in the first correction value generation unit 330.

Specifically, when the second acquisition unit uses the SfM method as in the present embodiment, feature points are calculated from an image obtained by capturing the current surrounding environment acquired by an imaging apparatus in the same manner as in the optical flow calculation process of step S321 described above, and a reliability score is acquired based on the calculated feature points.

More specifically, a reliability score S is calculated based on the number N of feature points within the angle of view, the distribution D of feature points within the angle of view, and the reliability C of the calculated feature points, using, for example, the following Equation 5.

$$S = \alpha*N + \beta*D + \gamma*C \ ... \ (\text{Equation 5})$$

Incidentally, $\alpha$, $\beta$, and $\gamma$ are coefficients that are set appropriately.

The distribution D of feature points within the angle of view is expressed as $D = \delta*\sigma$ using the standard deviation $\sigma$ based on a histogram of the coordinate values of the coordinates at which the feature points are acquired. The reliability C of a feature point is calculated based on the strength of the feature amount according to the method used to calculate the feature point, and the sum of the strengths of the feature amounts of the feature points is set as the reliability C of the feature point.

In step S342, the CPU of the distance measurement device 110 determines the reliability score by comparing the reliability score S generated in step S341 with an appropriately set threshold. When the reliability score S exceeds the threshold, it is determined that the first correction value is appropriate (True), and the process proceeds to step S343. On the other hand, when the reliability score S is equal to or less than the threshold in step S342, it is determined that the first correction value is not appropriate (False), and the flow of Fig. 7 ends.

When it is determined that the first correction value is appropriate, in step S343, the CPU of the distance measurement device 110 registers it as valid data. That is, in step S343, the first correction value is associated with the data acquisition time and the reliability score S, and is stored in the information storage unit 170, thereby being registered.

Here, the storage format of the first correction value may be in the form of approximate surface data of the image side change amount, but from the viewpoint of data volume, only the coefficients of the polynomial that were the basis for creating the approximate surface data may be stored in the information storage unit 170. Then, in a second correction value generation process to be described later, an approximate surface may be generated again based on the coefficients of the polynomial stored in the information storage unit 170.

Fig. 7B is a flowchart illustrating an example of a generation process of the second correction value in step S350. The operation of each step in the flowchart of Fig. 7B is performed in sequence by a CPU or the like serving as a computer within the distance measurement device 110 executing a computer program stored in a memory.

In step S350, the CPU of the distance measurement device 110 generates a second correction value that is more reliable than the first correction value, using one or more first correction values that have been determined to be appropriate in the reliability score S determined in the previous step and registered in the valid data.

Here, step S350 functions as a second correction value generation step of generating a second correction value from the first correction value whose reliability score is equal to or greater than a predetermined threshold and which is acquired within a predetermined valid time interval.

Specifically, the CPU of the distance measurement device 110 acquires data within a valid time interval from the information storage unit 170 in step S351, and generates a more reliable second correction value from a plurality of first correction values in step S352.

Fig. 7C is a diagram for describing an example of a method for generating the second correction value. In the graph of Fig. 7C, the horizontal axis represents time, and the vertical axis represents the first correction value. The plotted points indicate the first correction values acquired at each time.

Here, the first correction value is two-dimensional data in the surface direction, but for convenience, it is plotted on the graph as a scalar value. The density of the plot points corresponds to the reliability score. The higher the density, the higher the reliability score S. The plot points with a white circle indicate points that have a low reliability score in the reliability score determination unit 340 and are determined to be False.

Next, a specific example of a method for generating the second correction value when the current time is t1 will be described. The two directional arrows in the drawing indicate the valid time interval te of the first correction value. The valid time interval te is a time determined from a predicted value of a change in state of the distance measurement device over time.

That is, it is set shorter than the predicted time interval at which a change over time occurs. In other words, within the valid time interval te, a plurality of correction values can be acquired with the expected amount of error over time being equal to or less than a certain value. In other words, for a distance measurement device having a certain error, it is possible to expect results equivalent to those obtained by correcting using a plurality of pieces of data.

The valid time interval te may be set based on movable apparatus information relating to the movable apparatus. The movable apparatus information includes, for example, at least one of the speed and directional change of the movable

EP 4 632 322 A1

apparatus. For example, when the speed and directional change of the movable apparatus are greater than respective predetermined values, it is desirable to shorten the valid time interval te in order to ensure the validity of the first correction value.

When the reliability score determination of the first correction value is erroneously estimated in step S340, the first correction value may contain a large error even when it is determined in step S340 that the first correction value is reliable. Even in such a case, a more reliable second correction value can be generated by extracting only the first correction values within the valid time interval te from the first correction values obtained under a plurality of conditions and generating a second correction value.

For example, in Fig. 7C, seven first correction values are created during the valid time interval te from the current time t1. The time points at points a4 and a5 have low reliability scores, and the values are significantly different from the other points of the first correction value. Therefore, a second correction value is created from the five points whose reliability score S is greater than the predetermined threshold and whose data is within the valid time interval.

For example, when the reliability scores S are compared, if the maximum reliability score S is at the time of point a2, the first correction value at the time of a2 is used as the second correction value. In this case, it is expected that correction can be performed with higher accuracy by using the first correction value at point a2 rather than simply using the first correction value at point a7 generated at the current time t1 as the second correction value.

In this way, the second correction value generation unit may use, as the second correction value, the first correction value having the largest reliability score among a plurality of first correction values determined to be reliable by the reliability score determination unit within the valid time interval.

Next, the case where the time advances to t2 will be described. At time t2, a second correction value is generated similarly using the first correction value of the point having the maximum reliability score S within the valid time interval te. That is, the first correction value at the time of point a6 having the maximum reliability score S is employed as the second correction value. In this case, the reliability score S at the time of a6 is lower than the reliability score S at the time of a2 which is employed as the second correction value at time t1.

However, since the time interval from time t2 to the time of point a2 is greater than the valid time interval te, there is a high likelihood that an error has occurred over time. Therefore, even at time t2, a more reliable first correction value can be generated as the second correction value from among a plurality of first correction values that are unlikely to change over time and are highly reliable, thereby making it possible to perform a more reliable correction.

In the above example, the valid data within the valid time interval te was selected with the maximum reliability score S as the second correction value, but the second correction value may also be generated using a plurality of first correction values.

For example, by using the average value of a plurality of first correction values that are within the valid time interval te and have a reliability score S greater than a threshold as the second correction value, it is possible to generate a correction value that is more resistant to noise. Alternatively, the second correction value may be generated by statistically treating a plurality of pieces of data, for example, by multiplying each first correction value by the reliability score S as a weight and averaging the results.

That is, the second correction value generation unit may generate the second correction value by averaging or weighting the plurality of first correction values determined to be reliable by the reliability score determination unit within the valid time interval, by using the reliability score.

Finally, in step S360 in Fig. 3B, the CPU of the distance measurement device 110 executes a correction processing step. That is, step S360 functions as a correction step in which the first distance information Idist1 is corrected using the generated second correction value Ic2 to generate corrected distance information IdistC.

Specifically, when the first acquisition unit converts the defocus amount ΔL generated by the distance conversion process in step S314 into B in Equation 2 (the distance from the principal point of the image forming optical system 120 to the image plane), the defocus amount ΔL' corrected by the following Equation 6 is used.

$$\Delta L' = \Delta L - Ic2 \dots \text{(Equation 6)}$$

The distance to the subject is calculated based on Equation 2 using the distance B from the principal point of the image forming optical system 120 to the image plane calculated using this corrected defocus amount ΔL', thereby calculating corrected distance information IdistC. That is, in the present embodiment, the defocus amount is corrected using the second correction value Ic2.

It is not necessary to perform the above correction process every time a distance is calculated. Since the time interval during which environmental changes over time occur is much longer than the time interval during which the distance measurement device 110 calculates the distance, the second correction value Ic2 calculated as described above can continue to be used for a while after the next frame.

Note that, because a change over time occurs as a change amount on the image plane due to the principle of occurrence, it is desirable to correct the distance information using the defocus amount on the image side, rather than the subject distance on the object side, as in the first embodiment.

In the present embodiment, the first correction value generation unit 330 compares (calculates the difference between) the first distance information and the second distance information as the image side defocus amount. Therefore, correction information can be calculated by approximating all angles of view at once on the same scale regardless of whether the subject is close or far away, without being affected by the longitudinal magnification of the optical system. As a result, a large number of data points can be secured for use in the approximation, and the correction information can be calculated with high accuracy.

Furthermore, when the characteristics of the image forming optical system 120 change over time due to changes in temperature and humidity or the effects of vibration, not only will the image side change amount change, but the focal length and BL value will also change, which can become a cause of distance measurement errors. However, even when the focal length or BL value changes, as is clear from Equation 1 and Equation 2, the change amount is reflected in the change amount in BP, and therefore, correction can be performed simultaneously by the correction process according to the present embodiment.

In the above embodiment, a set of two image signals captured at two different times was used as the set of images used for calculating the optical flow in the second acquisition unit, but any number of sets of image signals may be used. By increasing the number of sets, the number of combinations of images for calculating the optical flow increases, and the accuracy of calculating the camera movement amount and the second distance information can be improved.

Furthermore, the image groups at time t1 and time t2 may be acquired by, for example, a person carrying a camera and walking around.

Moreover, various types of calculation processing do not need to be provided inside an imaging apparatus such as a camera. For example, data may be sent to an external server or terminal via a network and executed using a CPU, a GPU, or an IC mounted on that server or terminal.

<Second Embodiment>

A second embodiment of the present disclosure will be described. In the second embodiment, in determining the reliability score S, a determination of an outlier of the first correction value is performed. Hereinafter, a flow of processing will be described in regard to differences in the processing from that in the first embodiment.

Fig. 8A is a flowchart illustrating an example of a flow of determining a reliability score in the second embodiment. The operation of each step in the flowchart of Fig. 8A is performed in sequence by a CPU or the like serving as a computer within the distance measurement device 110 executing a computer program stored in a memory.

Step S800 corresponds to step S340 in the first embodiment, and in step S810, the CPU of the distance measurement device 110 performs a process of generating a reliability score S of the first correction value, similarly to step S341.

In step S820, the CPU of the distance measurement device 110 determines the reliability score S in the same manner as in step S342, and proceeds to step S830 when the reliability score exceeds a predetermined threshold, and ends the flow of Fig. 8 when the reliability score is equal to or less than the predetermined threshold.

In the second embodiment, in step S830, the CPU of the distance measurement device 110 further performs an outlier determination on the first correction value determined to be reliable in the reliability score determination.

An example of the outlier determination in step S830 in the second embodiment will be described with reference to Figs. 8B and 8C. Fig. 8B is a flowchart illustrating an example of the flow of outlier determination, and Fig. 8C is a diagram for specifically describing the example of the flow of outlier determination.

The operation of each step in the flowchart of Fig. 8B is performed in sequence by a CPU or the like serving as a computer within the distance measurement device 110 executing a computer program stored in a memory.

First, in step S831, the CPU of the distance measurement device 110 reads valid data stored in the information storage unit 170. Here, only the data required for the next step needs to be read.

When valid data is read, for example, in the example illustrated in Fig. 8C, six valid points within the valid time interval te are read. t1 indicates the current time, and in Fig. 8C, a plurality of first correction values determined to be reliable in the reliability score determination are illustrated as plot points.

Next, in S832, the CPU of the distance measurement device 110 generates a statistical representative correction value cr from the plurality of first correction values registered as the valid data. The representative correction value cr indicates a more likely correction value assumed during the valid time interval te. That is, it is a correction value that can be the second correction value as described in the first embodiment.

Therefore, the correction value can be generated using a method similar to that of generating the second correction value. In Fig. 8C, the representative correction value cr is indicated by a dotted line. In this case, the statistical representative correction value cr is generated by, for example, averaging a plurality of first correction values, which are valid data.

In step S833, the CPU of the distance measurement device 110 compares each of the first correction values, which are valid data, with the representative correction value cr. As a method of comparison, a statistical error evaluation index such as the difference in average values or the root mean square error may be used. In Fig. 8C, the difference dc (difference) between the representative correction value cr and the latest first correction value is used as the evaluation value.

In step S834, the CPU of the distance measurement device 110 compares the evaluation value of the difference calculated in step S833 with a preset threshold. The threshold here may be rephrased as the allowable error.

When the evaluation value is less than the threshold, that is, the error is estimated to be small, it is determined to be not an outlier (False), and when it is equal to or greater than the threshold, that is, the error is estimated to be large, it is determined to be an outlier (True). The outlier determination result in step S834 is output as the determination result in step S840.

As can be seen from the example of Fig. 8C, for example, the first correction value at time t1 has a large evaluation value dc and is therefore determined to be an outlier in step S834. Therefore, even if the reliability score S is determined to be high in step S820 of Fig. 8A, it is determined to be an outlier (True) in step S830, and is not registered as valid data, and the flow of Fig. 8A ends.

That is, when there is a difference of a predetermined value or more between the statistical representative correction value cr of a plurality of the first correction values within the valid time interval whose reliability scores are equal to or greater than a threshold and the latest first correction value, the reliability score is determined to be unreliable even if it is equal to or greater than the threshold.

On the other hand, when the evaluation value dc is small, it is determined in step S834 that it is not an outlier (False), the determination in step S830 is False, and in step S840, the first correction value is registered as valid data. Thereafter, the process proceeds to step S350, and a second correction value is generated using the registered valid data.

By performing outlier determination using valid data within the valid time interval te as described above, it is possible to exclude the first correction value of outliers that cannot be completely eliminated by the reliability score S, thereby generating a more stable correction value.

<Third Embodiment>

In a third embodiment, when the reliability score S is determined to be False (unreliable), the second correction value is not updated. That is, the second correction value generation unit does not update the second correction value when it is determined to be unreliable by the reliability score determination unit.

Fig. 9A is a flowchart illustrating an example of the operation of a distance measurement device 110 according to the third embodiment. The operation of each step in the flowchart of Fig. 9A is performed in sequence by a CPU or the like serving as a computer within the distance measurement device 110 executing a computer program stored in a memory.

Steps S910 to S930 in Fig. 9A are the same as steps S310 to S330 in Fig. 3B, and therefore a description thereof will be omitted. In step S940 in Fig. 9A, the CPU of the distance measurement device 110 performs a reliability score determination process. The processing content is the same as the reliability score determination process in step S342 or step S820. In the third embodiment, the reliability score is determined using valid data within the valid time interval te.

When the reliability score S is equal to or less than the threshold, it is determined that the first correction value is not appropriate (False). When it is determined as False in step S940, the process does not proceed to the second correction value generation process in step S950, but proceeds to the correction value process in step S960.

When the reliability score S exceeds the threshold, in step S940, the CPU of the distance measurement device 110 determines that the first correction value is appropriate (True). When the determination result of step S940 is True, the process proceeds to step S950. In step S950, the CPU of the distance measurement device 110 generates a second correction value in a manner similar to that of the first embodiment and the second embodiment. Then, the process proceed to step S960.

In step S960, the CPU of the distance measurement device 110 performs the correction process in the same manner as in the first embodiment and the second embodiment. However, when the process proceeds to step S960 after it is determined as False in step S940, a new second correction value has not been generated in step S950. Therefore, the correction process is performed using the second correction value that already exists at the time of step S940 as it is.

Fig. 9B is a diagram for describing the effect of the third embodiment. In the graph of Fig. 9B, as in Fig. 7C, the horizontal axis represents time, and the vertical axis represents the first correction value. The plotted points indicate the first correction values acquired at each time. The density of the plot points corresponds to the reliability score. The higher the density, the higher the reliability score S. The plot points with a white circle indicate points that are determined to have a low reliability score (False) in the reliability score determination process of step S940.

At time t1 in Fig. 9B, the second correction value is generated and the correction process is performed in the same manner as in the previous embodiments. Since the first correction value at time t2 is a white circle, the reliability score determination in step S940 is determined to be False.

Therefore, the second correction value used in the correction process in step S960 is the same as the second correction value used at t1. Therefore, this is essentially equivalent to generating a second correction value for the valid time interval te with the first correction value at time t1 as a reference.

In the example of Fig. 9B, all the first correction values between time t2 and time t3 are indicated by white circles, and the reliability score S is determined to be False. Therefore, from time t2 to time t3, the first correction value at time t1 is used to generate the second correction value for the valid time interval te. Here, the second correction value is not updated even once during the valid time interval te from time t2 to time t3.

That is, the second correction value at time t3 is generated before the valid time interval te from the current time t3. Although it is unlikely that the second correction value generated using a correction value prior to the valid time interval will deteriorate immediately after the valid time interval te has passed, the probability of valid data being generated may be increased, for example, by reducing the threshold of the reliability score S.

As time progresses, at t4, a first correction value having a high reliability score is obtained, and the reliability score is determined to be True in step S940. Therefore, in step S950, the second correction value is updated. At this time, the correction data is generated using only the first correction value at point a9.

As described above, in the third embodiment, in step S940, the reliability score determination is performed using the valid data within the valid time interval te. Therefore, the first correction value that cannot be completely eliminated by the reliability score can be excluded as an outlier, and a more stable correction value can be generated.

<Fourth Embodiment>

A fourth embodiment of the present disclosure will be described. The fourth embodiment is an example in which a stereo camera is used as the first acquisition unit 1110 in the first embodiment. Hereinafter, a flow of processing will be described in regard to differences in the processing from that in the first embodiment.

Fig. 10 is a diagram schematically illustrating an example of the configuration of a distance measurement device according to the fourth embodiment. In Fig. 10, an imaging apparatus 1000 includes a first image forming optical system 1021, a first imaging element 1001, a second image forming optical system 1022, a second imaging element 1002, a distance measurement device 110, and an information storage unit 170.

The first image forming optical system 1021 has a first optical axis 1041, and the second image forming optical system 1022 has a second optical axis 1042, and the first image forming optical system 1021 and the second image forming optical system 1022 are installed so that their optical axes are parallel. Moreover, the first optical axis 1041 and the second optical axis 1042 are separated by a baseline length B1 of the stereo camera.

Fig. 11A is a functional block diagram illustrating an example of the configuration of a distance measurement device 1010 according to the fourth embodiment. In the fourth embodiment, a stereo camera is used, and therefore, the configuration includes two imaging elements, a first imaging element 1001 and a second imaging element 1002.

That is, the first acquisition unit 1110 acquires first distance information using a stereo camera, but otherwise is similar to the first embodiment. That is, 1110 to 1160 and 1170 in Fig. 11A are the same functional blocks as 310 to 360 and 170 in Fig. 3.

Fig. 11B is a flowchart illustrating an example of the operation of the distance measurement device 1010. The operation of each step in the flowchart of Fig. 11B is performed in sequence by a CPU or the like serving as a computer within the distance measurement device 110 executing a computer program stored in a memory. Incidentally, steps S1140 to S1160 are the same processes as steps S340 to S360 in Fig. 3B, respectively, and therefore a description thereof will be omitted.

In step S1110, the CPU of the distance measurement device 110 performs a first acquisition process using a first image group Sg1 acquired from the first imaging element 1001 and the second imaging element 1002 using the first acquisition unit 1110. Then, the first distance information Idist1 indicating the distance to the subject is acquired.

The first image group Sg1 includes a first image signal S11 generated by the first imaging element 1001 and a second image signal S12 generated by the second imaging element 1002. The specific processing contents will be described below with reference to Fig. 12A.

Fig. 12A is a flowchart illustrating an example of the operation of a second acquisition process according to the fourth embodiment. The operation of each step in the flowchart of Fig. 12A is performed in sequence by a CPU or the like serving as a computer within the distance measurement device 110 executing a computer program stored in a memory.

The processes in steps S1111 to S1113 in Fig. 12A are the same as those in steps S311 to S313 in Fig. 3C, respectively, and therefore a description thereof will be omitted. The CPU of the distance measurement device 110 calculates the parallax amount in step S1113, and performs a distance conversion process in step S1114.

In the first embodiment, the parallax amount is converted into the defocus amount, but in the present embodiment, the parallax amount is not converted into the defocus amount, and in step S1110, first distance information Idist1 including the parallax amount at a plurality of pixel positions as the distance information is acquired.

In the case of the stereo camera used in the present embodiment, the parallax amount can be directly converted into the subject distance using the following Equation 7.

$$Z = B \times f/D \; ... \; \text{(Equation 7)}$$

Note that D is the parallax, B is the baseline length, and f is the focal length of the first image forming optical system 1021 and the second image forming optical system 1022, which are assumed to be the same value. In Equation 7, the baseline length and the focal length are known values.

Next, the second acquisition process in step S1120 will be described with reference to Fig. 12B. Fig. 12B is a flowchart illustrating an example of a process for calculating an optical flow. The operation of each step in the flowchart of Fig. 12B is performed in sequence by a CPU or the like serving as a computer within the distance measurement device 110 executing a computer program stored in a memory.

The distance calculation process from step S1021 to step S1022 is similar to the process from step S321 to step S322 in Fig. 5A, respectively. This allows the distance z from the camera to each coordinate on the image of the feature point 502 to be calculated.

In step S1023, the CPU of the distance measurement device 110 performs a second distance calculation process. That is, the distance from the camera to each coordinate on the image of the feature point 502 calculated in step S1022 or earlier is converted into a parallax amount using Equation 7, and this is set as second distance information Idist2.

Next, the first correction value generation process in step S1130 in Fig. 11B will be specifically described with reference to Figs. 13A to 13E. Fig. 13A is a flowchart illustrating an example of the operation of a second correction value generation process according to the fourth embodiment.

The operation of each step in the flowchart of Fig. 13A is performed in sequence by a CPU or the like serving as a computer within the distance measurement device 110 executing a computer program stored in a memory.

In step S1131, the CPU of the distance measurement device 110 performs a parallax change amount calculation process. That is, in step S1131, the first distance information Idist1 acquired by the first acquisition unit 1110 and the second distance information Idist2 acquired by the second acquisition unit 1120 are used to calculate a ratio of the parallax amounts as the parallax change amount.

Fig. 13B is a diagram illustrating an example of a parallax amount D1, which is the first distance information Idist1 acquired by the first acquisition unit 1110. Fig. 13C is a diagram illustrating an example of a parallax amount D2, which is the second distance information Idist2 acquired by the second acquisition unit 1120.

As illustrated in Fig. 13C, since second distance information Idist2 is acquired for the pixel corresponding to the feature point 502, the parallax amount D2 is a sparse data group corresponding to each coordinate on the image of the feature point 502. Fig. 13D is a diagram illustrating an example of the parallax amount along I-I' in Figs. 13B and 13C.

A discontinuous line segment p1 in Fig. 13D indicates a parallax amount D1 which is the first distance information Idist1, and point data p2 in Fig. 13D indicates a parallax amount D2 which is the second distance information Idist2. As described above, the first distance information Idist1 contains an error due to changes over time of the imaging apparatus 1000.

On the other hand, the second distance information Idist2 is hardly affected by changes in the imaging apparatus 1000 over time. Here, by calculating the ratio D2/D1 of the parallax amounts as the parallax change amount, it is possible to create a correction value coefficient capable of correcting the parallax amount D1 including the influence over time.

In step S1132, the CPU of the distance measurement device 110 performs a correction information calculation process. That is, in step S1132, similarly to the first embodiment, surface fitting by polynomial approximation on the xy plane is performed using the ratio D2/D1 of the acquired parallax amounts, which is discrete with respect to the angle of view, to estimate the ratio D2/D1 of the continuous parallax amounts. Here, the approximate surface data of the calculated ratio D2/D1 of the parallax amounts is used as a first correction value Ic1 (first correction information).

Fig. 13E is a diagram illustrating an example of data 1003 obtained by interpolating between angles of view. In Fig. 13E, reference numeral 1002 denotes the ratio D2/D1 of the parallax amounts acquired at each data acquisition coordinate 601. Reference numeral 1003 indicated by the dashed line is data obtained by interpolating between angles of view by fitting using a polynomial approximation with the difference of reference numeral 1002, which is the ratio D2/D1 of the parallax amounts, and corresponds to the first correction value Ic1 (first correction information).

Steps S1140 to S1160 are similar to steps S340 to S360 in Fig. 3B. That is, the first correction value Ic1 (first correction information) calculated in step S1130 is subjected to a reliability score determination process in step S1140 of Fig. 11B. Furthermore, in step S1150, a second correction value generation process is executed, and in step S1160, a correction process is performed to correct the parallax amount using the second correction value.

As described above, the distance measurement devices of the First to Fourth Embodiments are mounted on, for example, a movable apparatus, or are connected, for example, wirelessly to control the movable apparatus. The movable apparatus also has a control unit such as an ECU for issuing a warning or controlling a moving operation of the movable apparatus based on the first distance information corrected by the correction unit.

That is, when the control unit of the movable apparatus detects based on the first distance information that the distance between an obstacle or the like and the movable apparatus is equal to or less than a predetermined value, it performs control to change the direction of travel of the movable apparatus, decelerate, or stop the movable apparatus in order to issue a warning or avoid the obstacle.

While the present disclosure has been described with reference to embodiments, it is to be understood that the disclosure is not limited to the disclosed embodiments, but is defined by the scope of the following claims.

In addition, as a part or the whole of the control according to the embodiments, a computer program realizing the function of the embodiments described above may be supplied to the distance measurement device or the like through a network or various storage media. Then, a computer (or a CPU, an MPU, or the like) of the distance measurement device or the like may be configured to read and execute the program. In such a case, the program and the storage medium storing the program configure the present disclosure.

In addition, the present disclosure includes those realized using at least one processor or circuit configured to perform functions of the embodiments explained above. For example, a plurality of processors may be used for distribution processing to perform functions of the embodiments explained above.

This application claims the benefit of priority from Japanese Patent Application No. 2024-064858 filed on April 12, 2024.

**Claims**

1.    A distance measurement device comprising:

a first acquisition unit (310, 1110) configured to acquire first distance information;
a second acquisition unit (320, 1120) configured to acquire second distance information;
a first correction value generation unit (330, 1130) configured to calculate a first correction value for correcting the first distance information based on the second distance information;
a reliability score determination unit (340, 1140) configured to calculate a reliability score indicating a reliability of the first correction value and determine the reliability of the first correction value based on the reliability score;
a second correction value generation unit (350, 1150) configured to generate a second correction value from the first correction value whose reliability score is equal to or greater than a predetermined threshold and which is acquired within a predetermined valid time interval (te); and
a correction unit configured (360, 1160) to correct the first distance information using the second correction value.

2.    The distance measurement device according to claim 1, wherein the valid time interval (te) is set based on movable apparatus information relating to a movable apparatus.

3.    The distance measurement device according to claim 2, wherein the movable apparatus information includes at least one of a speed and a change in direction of the movable apparatus.

4.    The distance measurement device according to any one of claims 1 to 3, wherein the second correction value generation unit (350, 1150) is configured to use, as the second correction value, the first correction value having the largest reliability score among a plurality of the first correction values determined to be reliable by the reliability score determination unit (340, 1140) within the valid time interval (te).

5.    The distance measurement device according to any one of claims 1 to 4, wherein the second correction value generation unit (350, 1150) is configured to generate the second correction value by averaging or weighting a plurality of the first correction values determined to be reliable by the reliability score determination unit (340, 1140) within the valid time interval (te), by using the reliability score.

6.    The distance measurement device according to any one of claims 1 to 5, wherein, when there is a difference of a predetermined value or more between a statistical representative correction value of a plurality of the first correction values within the valid time interval (te) whose reliability scores are equal to or greater than the threshold and the latest first correction value, the reliability score is determined to be unreliable even if it is equal to or greater than the threshold.

7.    The distance measurement device according to any one of claims 1 to 6, wherein the second correction value generation unit (350, 1150) is configured not to update the second correction value when it is determined to be unreliable by the reliability score determination unit (340, 1140).

8. The distance measurement device according to any one of claims 1 to 7, wherein the first acquisition unit (310, 1110) is configured to acquire the first distance information using an imaging element having a distance measurement function by an imaging plane phase difference distance measurement method.

9. The distance measurement device according to claim 8, wherein the second correction value is configured to correct a defocus amount.

10. The distance measurement device according to any one of claims 1 to 9, wherein the first acquisition unit (310, 1110) is configured to acquire the first distance information using a stereo camera.

11. The distance measurement device according to claim 10, wherein the second correction value is configured to correct a parallax amount.

12. A movable apparatus comprising: a control unit configured to issue a warning or control a moving operation of the movable apparatus based on the first distance information corrected by the correction unit (360, 1160) of the distance measurement device according to any one of claims 1 to 11.

13. A distance measurement method comprising:

   acquiring first distance information (S310, S1110);
   acquiring second distance information (S320, S1120);
   calculating a first correction value (S330, S1130) for correcting the first distance information based on the second distance information;
   calculating a reliability score (S340, S1140) indicating a reliability of the first correction value and determining the reliability of the first correction value based on the reliability score;
   generating a second correction value (S350, S1150) from the first correction value whose reliability score is equal to or greater than a predetermined threshold and which is acquired within a predetermined valid time interval (te); and
   correcting (S360, S1160) the first distance information using the second correction value.

14. A computer program comprising instructions which, when the program is executed by a computer, cause the computer to carry out the method of claim 13.

15. A computer-readable data carrier having stored thereon the computer program of claim 14.

## FIG. 1A

## FIG. 1B

## FIG. 1C

## FIG. 2A

## FIG. 2B

## FIG. 2C

## FIG. 2D

## FIG. 3A

```
┌──────────────────────┐      ┌──────────────────────────┐
│   IMAGING ELEMENT    │─────▶│  INFORMATION STORAGE     │
│        101           │      │       UNIT   170         │
└──────────────────────┘      └──────────────────────────┘
         │                              │
─ ─ ─ ─ ─│─ ─ ─ ─ ─ ─ ─ ─ ─ ─ ─ ─ ─ ─ ─│─ ─ ─ ─ ─ ─ ─
 110     ▼                              ▼
┌──────────────────────┐      ┌──────────────────────────┐
│ FIRST ACQUISITION    │      │ SECOND ACQUISITION UNIT  │
│     UNIT    310       │      │            320          │
└──────────────────────┘      └──────────────────────────┘
         │                              │
         └──────────────┬───────────────┘
                        ▼
        ┌──────────────────────────────┐
        │   FIRST CORRECTION VALUE     │  330
        │      GENERATION UNIT         │
        └──────────────────────────────┘
                        ▼
        ┌──────────────────────────────┐
        │   RELIABILITY SCORE          │  340
        │   DETERMINATION UNIT         │◀────
        └──────────────────────────────┘
                        ▼
        ┌──────────────────────────────┐
        │  SECOND CORRECTION VALUE     │  350
        │     GENERATION UNIT          │◀────
        └──────────────────────────────┘
                        ▼
        ┌──────────────────────────────┐
        │      CORRECTION UNIT         │  360
        └──────────────────────────────┘
                        ▼
```

## FIG. 3B

```
        ( START )
            │
            ▼
┌──────────────────────────┐
│  PERFORM FIRST           │  S310
│  ACQUISITION PROCESS     │
└──────────────────────────┘
            │
            ▼
┌──────────────────────────┐
│  PERFORM SECOND          │  S320
│  ACQUISITION PROCESS     │
└──────────────────────────┘
            │
            ▼
┌──────────────────────────┐
│  PERFORM FIRST           │  S330
│  CORRECTION VALUE        │
│  GENERATION PROCESS      │
└──────────────────────────┘
            │
            ▼
┌──────────────────────────┐
│  PERFORM RELIABILITY     │  S340
│  SCORE DETERMINATION     │
│  PROCESS                 │
└──────────────────────────┘
            │
            ▼
┌──────────────────────────┐
│  PERFORM SECOND          │  S350
│  CORRECTION VALUE        │
│  GENERATION PROCESS      │
└──────────────────────────┘
            │
            ▼
┌──────────────────────────┐
│  PERFORM CORRECTION      │  S360
│  PROCESS                 │
└──────────────────────────┘
            │
            ▼
         ( END )
```

## FIG. 3C

```
        ( S310 )
            │
            ▼
┌──────────────────────────┐
│  PERFORM LIGHT AMOUNT    │  S311
│  CORRECTION PROCESS      │
└──────────────────────────┘
            │
            ▼
┌──────────────────────────┐
│  PERFORM NOISE REDUCTION │  S312
│  PROCESS                 │
└──────────────────────────┘
            │
            ▼
┌──────────────────────────┐
│  PERFORM PARALLAX        │  S313
│  CALCULATION PROCESS     │
└──────────────────────────┘
            │
            ▼
┌──────────────────────────┐
│  PERFORM DISTANCE        │  S314
│  CONVERSION PROCESS      │
└──────────────────────────┘
            │
            ▼
         ( END )
```

FIG. 4A

FIG. 4B

AMOUNT OF FIELD CURVATURE

m2

m1

x

FIG. 4C

IMAGE SIDE CHANGE AMOUNT

x

# FIG. 5B

FEATURE POINTS OF IMAGE SIGNAL S21
(TIME t2)

# FIG. 5A

```
        S320
         │
         ▼               S321
┌─────────────────────────┐
│   PERFORM OPTICAL FLOW   │
│   CALCULATION PROCESS    │
└─────────────────────────┘
         │
         ▼               S322
┌─────────────────────────┐
│     PERFORM DISTANCE     │
│   CALCULATION PROCESS    │
└─────────────────────────┘
         │
         ▼               S323
┌─────────────────────────┐
│  PERFORM SECOND DISTANCE │
│   CALCULATION PROCESS    │
└─────────────────────────┘
         │
         ▼
        END
```

# FIG. 5C

FEATURE POINTS OF IMAGE SIGNAL S11
(TIME t1)

# FIG. 5D

CALCULATED OPTICAL FLOW

## FIG. 6A

S330

PERFORM IMAGE SIDE CHANGE AMOUNT CALCULATION PROCESS — S331

PERFORM CORRECTION INFORMATION CALCULATION PROCESS — S332

END

## FIG. 6B

## FIG. 6C

## FIG. 6D

DEFOCUS AMOUNT

P1

P2

601 601 601

## FIG. 6E

P1−P2

IMAGE SIDE CHANGE AMOUNT

602

603

601 601 601

## FIG. 7A

S340

S341

PERFORM RELIABILITY SCORE
GENERATION PROCESS OF FIRST
CORRECTION VALUE

S342

IS RELIABILITY SCORE
DETERMINED? — FALSE

TRUE — S343

REGISTER FIRST CORRECTION
VALUE AS VALID DATA

END

## FIG. 7B

S350

S351

ACQUIRE DATA WITHIN VALID TIME
INTERVAL

S352

GENERATE SECOND CORRECTION
VALUE FROM PLURALITY OF FIRST
CORRECTION VALUES

END

## FIG. 7C

CORRECTION VALUE

a4

te

a9

a10

a6

a7

a5

a1

a2

a3

a8

a11

a12

t1        t2        TIME

## FIG. 8A

S800

S810
PERFORM RELIABILITY SCORE
GENERATION PROCESS OF FIRST
CORRECTION VALUE

S820
IS RELIABILITY SCORE
DETERMINED? — NO

YES

S830
IS OUTLIER DETERMINATION
PERFORMED? — TRUE

FALSE — S840
REGISTER FIRST CORRECTION
VALUE AS VALID DATA

END

## FIG. 8B

S830

S831
READ VALID DATA

S832
GENERATE REPRESENTATIVE
CORRECTION VALUE FROM VALID DATA

S833
COMPARE FIRST CORRECTION VALUE
WITH REPRESENTATIVE CORRECTION
VALUE

S834
IS EVALUATION
VALUE OF DIFFERENCE LESS
THAN THRESHOLD? — TRUE

FALSE

END

## FIG. 8C

CORRECTION VALUE

te

○

FIRST CORRECTION VALUE

a3

a5  a6

dc

a1  a2

a4

○

○

t1

TIME

FIG. 9A

```
                    ( START )
                        │
                        ▼
        ┌───────────────────────────────┐
        │║  PERFORM FIRST ACQUISITION   ║│───S910
        │║          PROCESS            ║│
        └───────────────────────────────┘
                        │
                        ▼
        ┌───────────────────────────────┐
        │║      PERFORM SECOND          ║│───S920
        │║   ACQUISITION PROCESS       ║│
        └───────────────────────────────┘
                        │
                        ▼
        ┌───────────────────────────────┐
        │║  PERFORM FIRST CORRECTION    ║│───S930
        │║  VALUE GENERATION PROCESS   ║│
        └───────────────────────────────┘
                        │
                        ▼
                                        S940
                ◇                    ╱
          IS RELIABILITY
       SCORE DETERMINATION PROCESS      FALSE
            PERFORMED?          ◇────────────┐
                │                            │
                │ TRUE                       │
                ▼                            │
        ┌───────────────────────────────┐   │
        │  PERFORM SECOND CORRECTION    │───S950
        │  VALUE GENERATION PROCESS     │   │
        └───────────────────────────────┘   │
                        │◄──────────────────┘
                        ▼
        ┌───────────────────────────────┐
        │  PERFORM CORRECTION PROCESS   │───S960
        └───────────────────────────────┘
                        │
                        ▼
                    ( END )
```

FIG. 9B

FIG. 10

FIG. 11B

START

↓

S1110 — PERFORM FIRST ACQUISITION PROCESS

↓

S1120 — PERFORM SECOND ACQUISITION PROCESS

↓

S1130 — PERFORM FIRST CORRECTION VALUE GENERATION PROCESS

↓

S1140 — PERFORM RELIABILITY SCORE DETERMINATION PROCESS

↓

S1150 — PERFORM SECOND CORRECTION VALUE GENERATION PROCESS

↓

S1160 — PERFORM CORRECTION PROCESS

↓

END

FIG. 11A

1001 FIRST IMAGING ELEMENT

1002 SECOND IMAGING ELEMENT

1070 INFORMATION STORAGE UNIT

1110 FIRST ACQUISITION UNIT

1120 SECOND ACQUISITION UNIT

1130 FIRST CORRECTION VALUE GENERATION UNIT

1140 RELIABILITY SCORE DETERMINATION UNIT

1150 SECOND CORRECTION VALUE GENERATION UNIT

1160 CORRECTION UNIT

1010

# FIG. 12A

S1110

PERFORM LIGHT AMOUNT CORRECTION PROCESS — S1111

PERFORM NOISE REDUCTION PROCESS — S1112

PERFORM PARALLAX CALCULATION PROCESS — S1113

PERFORM DISTANCE CONVERSION PROCESS — S1114

END

# FIG. 12B

S1020

PERFORM OPTICAL FLOW CALCULATION PROCESS — S1021

PERFORM DISTANCE CALCULATION PROCESS — S1022

PERFORM SECOND DISTANCE CALCULATION PROCESS — S1023

END

## FIG. 13A

```
        ┌──────────┐
        │  S1130   │
        └────┬─────┘
             ▼
┌────────────────────────────┐
│ PERFORM PARALLAX CHANGE     │──── S1131
│ AMOUNT CALCULATION PROCESS  │
└────────────┬───────────────┘
             ▼
┌────────────────────────────┐
│ PERFORM CORRECTION          │
│ INFORMATION CALCULATION     │──── S1132
│ PROCESS                     │
└────────────┬───────────────┘
             ▼
        ┌──────────┐
        │   END    │
        └──────────┘
```

## FIG. 13B

## FIG. 13D

## FIG. 13C

## FIG. 13E

Europäisches
Patentamt

European
Patent Office

Office européen
des brevets

# EUROPEAN SEARCH REPORT

**Application Number**

EP 25 16 6794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/224069 A1 (AOKI SHIN [JP]) 6 September 2012 (2012-09-06) | 1,10-15 | INV. G01C3/08 |
| Y | * paragraphs [0001] - [0005], [0018], [0025], [0071], [0113] - [0121]; figures 1,3 * | 2-9 | G01C3/14 G01S7/497 H04N13/00 |
| Y | US 2023/286548 A1 (TANAKA SHIN [JP] ET AL) 14 September 2023 (2023-09-14) * paragraphs [0188], [0189], [0237], [0300], [0301] * | 2,3,8,9 | |
| Y | US 2020/120323 A1 (TANAKA SHIN [JP]) 16 April 2020 (2020-04-16) * paragraphs [0002] - [0004], [0052] - [0059], [0068] * | 4-7 | |

**TECHNICAL FIELDS SEARCHED (IPC)**

G01C
H04N
G01S
G01B
G06T
G06V

The present search report has been drawn up for all claims

| Place of search | Date of completion of the search | Examiner |
|---|---|---|
| The Hague | 18 July 2025 | de la Rosa Rivera, E |

EPO FORM 1503 03.82 (P04C01)

## ANNEX TO THE EUROPEAN SEARCH REPORT
## ON EUROPEAN PATENT APPLICATION NO.

EP 25 16 6794

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2025

| Patent document cited in search report | Publication date | Patent family member(s) | | Publication date |
|---|---|---|---|---|
| US 2012224069 A1 | 06-09-2012 | BR | 112012026769 A2 | 12-07-2016 |
| | | CN | 102612634 A | 25-07-2012 |
| | | EP | 2616768 A1 | 24-07-2013 |
| | | JP | 5440461 B2 | 12-03-2014 |
| | | JP | 2012058188 A | 22-03-2012 |
| | | KR | 20120079144 A | 11-07-2012 |
| | | RU | 2529594 C1 | 27-09-2014 |
| | | US | 2012224069 A1 | 06-09-2012 |
| | | WO | 2012035983 A1 | 22-03-2012 |
| US 2023286548 A1 | 14-09-2023 | CN | 116736277 A | 12-09-2023 |
| | | EP | 4246467 A1 | 20-09-2023 |
| | | JP | 2023131720 A | 22-09-2023 |
| | | US | 2023286548 A1 | 14-09-2023 |
| US 2020120323 A1 | 16-04-2020 | CN | 107077725 A | 18-08-2017 |
| | | EP | 3213290 A1 | 06-09-2017 |
| | | JP | 5980294 B2 | 31-08-2016 |
| | | JP | 2016085637 A | 19-05-2016 |
| | | US | 2017295355 A1 | 12-10-2017 |
| | | US | 2020120323 A1 | 16-04-2020 |
| | | WO | 2016067541 A1 | 06-05-2016 |

EPO FORM P0459

For more details about this annex : see Official Journal of the European Patent Office, No. 12/82

**REFERENCES CITED IN THE DESCRIPTION**

**Patent documents cited in the description**

- JP 2022154179 A
- JP 2024064858 A